# EUROPEAN PATENT APPLICATION

(11) **EP 4 746 511 A1**
(43) Date of publication of application: **20.05.2026**
(21) Application number: 24850969.7
(22) Date of filing: 05.08.2024
(51) Int. Cl.: H04W 28/06

(54) **DATA PACKET PROCESSING METHOD AND COMMUNICATION APPARATUS**

(30) Priority: 09.08.2023 CN 202311004795
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2024/109838
(87) International publication number: WO 2025/031324

(57) **Abstract**

This application provides a data packet processing method and a communication apparatus, so that a network device can properly indicate, during uplink data transmission, a terminal device to discard a packet. This not only improves data transmission reliability, but also improves user experience. The method includes: The terminal device obtains first protocol data unit set importance PSI information corresponding to an uplink data packet and a proportion of a data amount corresponding to each piece of first PSI information, where the proportion of the data amount corresponding to each piece of first PSI information is a proportion of the data amount corresponding to each piece of first PSI information in a total data amount corresponding to the uplink data packet; and the terminal device sends first information of the uplink data packet to the network device, where the first information is used by the network device to perform packet discarding management on the uplink data packet, and the first information of the uplink data packet includes the first PSI information and the proportion of the data amount corresponding to each piece of first PSI information, or a proportion of a data amount corresponding to a part of the first PSI information.

## Description

This application claims priority to Chinese Patent Application No. 202311004795.9, filed with the China National Intellectual Property Administration on August 9, 2023 and entitled "DATA PACKET PROCESSING METHOD AND COMMUNICATION APPARATUS", which is incorporated herein by reference in its entirety.

### TECHNICAL FIELD

Embodiments of this application relate to the communication field, and more specifically, to a data packet processing method and a communication apparatus.

### BACKGROUND

As defined in the 3rd generation partnership project (the 3rd generation partnership project, 3GPP), a quality of service (quality of service, QoS) flow of an extended reality (extended reality, XR) service may include protocol data unit (protocol data unit, PDU) sets (sets) of different importance degrees, which are identified by using PDU set importance (PDU set importance, PSI). When network congestion occurs, transmission of data with high importance needs to be preferentially guaranteed. Therefore, it is proposed in 3GPP that when the network congestion occurs, transmission of a data packet with low importance may be preferentially abandoned. In downlink data transmission, a base station may actively discard some data with low importance after finding congestion. In uplink data transmission, the base station needs to indicate a user equipment (user equipment, UE) to discard data with low importance, to relieve pressure on transmission resources.

However, in uplink transmission, the base station does not know which data in uplink data affects user experience. Therefore, it is difficult for the base station to make a proper decision to indicate the UE to discard a packet. In addition, because there are a plurality of types of users in a network, a service flow of a part of users may not include an unimportant data packet. If the base station indicates this type of user to discard a packet, the users may not follow the indication. Consequently, the network congestion cannot be relieved. In addition, if the base station indicates the UE to discard data whose PSI is greater than a threshold, and there is no data whose PSI is greater than the threshold in the uplink data, the network congestion is not relieved either. Therefore, how to guarantee transmission of a data packet with high importance and also enable the base station to make a proper decision to indicate the UE to discard a packet is a problem that needs to be resolved.

### SUMMARY

This application provides a data packet processing method and a communication apparatus, so that a network device can properly indicate, during uplink data transmission, a terminal device to discard a packet. This not only improves data transmission reliability, but also improves user experience.

According to a first aspect, an embodiment of this application provides a data packet processing method. The method may be performed by a terminal device, or may be performed by a component (for example, a chip or a circuit) of the terminal device. This is not limited in this application. For ease of description, the following uses an example in which the terminal device performs the method for description. The method includes: A terminal device obtains first protocol data unit set importance PSI information corresponding to an uplink data packet and a proportion of a data amount corresponding to each piece of first PSI information, where the proportion of the data amount corresponding to each piece of first PSI information is a proportion of the data amount corresponding to each piece of first PSI information in a total data amount corresponding to the uplink data packet; the terminal device sends first information of the uplink data packet to a network device, where the first information of the uplink data packet includes the first PSI information and the proportion of the data amount corresponding to each piece of first PSI information, or a proportion of a data amount corresponding to a part of the first PSI information, and the first information is used by the network device to perform packet discarding management on the uplink data packet.

Based on the foregoing solution, regardless of whether the terminal device reports, to the network device, all PSI information corresponding to the data packet and the proportion of the data amount corresponding to each piece of PSI information, or the terminal device reports, to the network device, the proportion of the data amount corresponding to the part of PSI, the network device can know an importance degree and a proportion of data included in uplink data more clearly, so that when network congestion occurs, the network device can perform more proper packet discarding management. This solution improves packet discarding management performance of the network device, improves network stability when the congestion occurs, and improves user experience. In addition, when the terminal device reports, to the network device, the proportion of the data amount corresponding to the part of PSI, reporting efficiency can be further improved, and uplink resources can be saved.

With reference to the first aspect, in some implementations of the first aspect, the method further includes: The terminal device receives configuration information from the network device, where the configuration information includes an identifier corresponding to the uplink data packet, and the configuration information indicates the terminal device to report the first information of the uplink data packet corresponding to the identifier.

Based on the foregoing solution, the terminal device quickly determines, based on the configuration information, that first PSI information of a data packet corresponding to an identifier and a proportion of a data amount corresponding to each piece of first PSI information need to be obtained, to generate first information that needs to be reported. This can improve efficiency of generating the first information by the terminal device, and avoids a resource waste caused by obtaining and generating first information of all uplink data packets by the terminal device.

With reference to the first aspect, in some implementations of the first aspect, the identifier is a flow identifier of a quality of service QoS flow corresponding to the uplink data packet, an identifier of a logical channel LCH corresponding to the uplink data packet, or an identifier of a data radio bearer DRB corresponding to the uplink data packet.

Based on the foregoing solution, the uplink data packet is identified by using a general flow identifier of the QoS flow, the identifier of the LCH, or the identifier of the DRB, to improve implementation reliability of the solution.

With reference to the first aspect, in some implementations of the first aspect, the method further includes: The terminal device receives indication information from the network device, where the indication information indicates the terminal device to discard a data packet corresponding to a part of the first PSI information, or the indication information indicates the terminal device to discard a data packet that is in the uplink data packet and that is other than the data packet corresponding to the part of the first PSI information.

Based on the foregoing solution, when the terminal device reports, in the sent first information, a proportion of a data amount corresponding to a part of important PSI or a proportion of a data amount corresponding to a part of unimportant PSI, the network device may only indicate to discard a corresponding unimportant data packet. For example, if the terminal device reports the proportion of the data amount corresponding to the part of important PSI, the indication information sent by the network device does not need to carry PSI information, but only needs to indicate to discard a data packet corresponding to unreported PSI, that is, indicate to discard an unimportant data packet. If the terminal device reports the proportion of the data amount corresponding to the part of unimportant PSI, the indication information sent by the network device does not need to carry PSI information either, but only needs to indicate to perform discarding. In this solution, indication efficiency of the network device can be improved, and resources for carrying the indication information can be saved.

With reference to the first aspect, in some implementations of the first aspect, the proportion of the data amount corresponding to the part of the first PSI information is determined by the terminal device based on a preset first threshold.

Based on this solution, the terminal device may report, to the network device, a data amount corresponding to first PSI information that is less than the preset first threshold or a data amount corresponding to first PSI information that is greater than the preset first threshold, so that the terminal device can collect statistics about only a proportion of a data amount corresponding to a part of the first PSI information, to simplify an operation of the terminal device.

With reference to the first aspect, in some implementations of the first aspect, the method further includes: The terminal device updates the first PSI information and the proportion of the data amount corresponding to each piece of first PSI information to second PSI information and a proportion of a data amount corresponding to each piece of second PSI information; and the terminal device sends second information of the uplink data packet to the network device, where the second information of the uplink data packet includes the second PSI information and the proportion of the data amount corresponding to each piece of second PSI information, or a proportion of a data amount corresponding to a part of the second PSI information, and the second information is used by the network device to perform packet discarding management on the uplink data packet.

Based on this solution, updating the PSI information and the proportion can further improve accuracy of data packet management performed by the network device, and improve performance of the network device and user experience.

With reference to the first aspect, in some implementations of the first aspect, that the terminal device updates the first PSI information and the proportion of the data amount corresponding to each piece of first PSI information to the second PSI information and the proportion of the data amount corresponding to each piece of second PSI information includes: When the terminal device determines that a change of a proportion of a data amount corresponding to a part of the first PSI information exceeds a preset second threshold, the terminal device updates the first PSI information and the proportion of the data amount corresponding to each piece of first PSI information to the second PSI information and the proportion of the data amount corresponding to each piece of second PSI information.

Based on this solution, the terminal device updates the PSI information and the corresponding proportion only when the change of the proportion of the data amount corresponding to the first PSI information exceeds the preset second threshold. This improves update efficiency of the terminal device, and avoids a resource waste.

With reference to the first aspect, in some implementations of the first aspect, the network device is a first network device, and that the terminal device sends the first information of the uplink data packet to the network device includes: The terminal device sends the first information of the uplink data packet to the first network device, to enable the first network device to send the first information to a second network device through an F1 interface, where the first network device is a distributed unit DU, and the second network device is a central unit CU.

With reference to the first aspect, in some implementations of the first aspect, the network device is a first network device, and that the terminal device sends the first information of the uplink data packet to the network device includes: The terminal device sends the first information of the uplink data packet to the first network device, to enable the first network device to send the first information to a second network device through an F1 interface, where the first network device is a CU, and the second network device is a DU.

It should be noted that, in a distributed network device, the DU is more clear about a network congestion status. Therefore, the terminal device may first send the first information to the CU, so that the CU parses out the first information and then sends the first information to the DU. This can improve properness for the DU to indicate packet discarding.

With reference to the first aspect, in some implementations of the first aspect, the network device is a first network device, and that the terminal device sends the first information of the uplink data packet to the network device includes: The terminal device sends the first information of the uplink data packet to the first network device, to enable the first network device to send the first information to a second network device through an Xn interface, where the first network device is a source base station of the terminal device in a handover scenario, and the second network device is a target base station of the terminal device in the handover scenario.

With reference to the first aspect, in some implementations of the first aspect, the network device is a first network device, and that the terminal device sends the first information of the uplink data packet to the network device includes: The terminal device sends the first information of the uplink data packet to the first network device, to enable the first network device to send the first information to a second network device through an Xn interface, where the first network device is a source base station in a dual connectivity (dual connectivity, DC) scenario, and the second network device is a secondary base station in the DC scenario.

The first information is transferred through the F1 interface and the Xn interface, to ensure that in a CU-DU split scenario, the handover scenario, and the DC scenario, the first PSI information in the first information reported by the terminal device can be fully used by the network device, so that an application scenario of this solution is ensured.

With reference to the first aspect, in some implementations of the first aspect, the configuration information further indicates the terminal device to send first jitter information of the uplink data packet corresponding to the identifier, and the method further includes: The terminal device obtains the first jitter information, where the first jitter information is calculated by using a duration of a slot corresponding to a first reference subcarrier spacing SCS; and the terminal device sends the first jitter information to the network device.

Based on the jitter information, when making a packet discarding decision, the network device not only needs to consider the PSI information but also may consider jitter of the data packet, so that the network device can make a proper scheduling policy based on the jitter information, and improve, based on scheduling decision-making adjustment, properness of scheduling the data packet by the network device, to achieve an objective of improving user experience.

With reference to the first aspect, in some implementations of the first aspect, the method further includes: The terminal device updates the first jitter information to second jitter information, where the second jitter information is calculated by using the duration of the slot corresponding to the first reference SCS or a duration of a slot corresponding to a second reference SCS; and the terminal device sends the second jitter information to the network device.

Based on this solution, updating the jitter information can further improve an occasion for the network device to schedule the data packet, so that the network device makes a more proper scheduling decision.

With reference to the first aspect, in some implementations of the first aspect, that the terminal device updates the first jitter information to the second jitter information includes: When the terminal device determines that a change of the first jitter information exceeds a preset third threshold, or when the terminal device determines that the first reference SCS changes, the terminal device updates the first jitter information to the second jitter information.

Based on this solution, when the change of the first jitter information exceeds the preset third threshold, the terminal device performs update. This improves update efficiency of the terminal device, and avoids a resource waste.

With reference to the first aspect, in some implementations of the first aspect, the first PSI information is a PSI level or a range of a PSI level.

According to a second aspect, an embodiment of this application provides a data packet processing method. The method may be performed by a network device, or may be performed by a component (for example, a chip or a circuit) of the network device. This is not limited in this application. For ease of description, the following uses an example in which the network device performs the method for description. The method includes: The network device receives first information of an uplink data packet from a terminal device, where the first information of the uplink data packet includes first protocol data unit importance PSI information corresponding to the uplink data packet and a proportion of a data amount corresponding to each piece of first PSI information, or a proportion of a data amount corresponding to a part of the first PSI information, and the proportion of the data amount corresponding to each piece of first PSI information is a proportion of the data amount corresponding to each piece of first PSI information in a total data amount corresponding to the uplink data packet; and the network device performs packet discarding management on the uplink data packet based on the first information.

With reference to the second aspect, in some implementations of the second aspect, the method further includes: The network device sends configuration information to the terminal device, where the configuration information includes an identifier corresponding to the uplink data packet, and the configuration information indicates the terminal device to report the first information of the uplink data packet corresponding to the identifier.

Specifically, for related descriptions of the identifier, refer to the descriptions of the identifier in the first aspect. Details are not described herein again.

With reference to the second aspect, in some implementations of the second aspect, the method further includes: The network device sends indication information to the terminal device, where the indication information indicates the terminal device to discard a data packet corresponding to a part of the first PSI information, or the indication information indicates the terminal device to discard a data packet that is in the uplink data packet and that is other than the data packet corresponding to the part of the first PSI information.

With reference to the second aspect, in some implementations of the second aspect, the proportion of the data amount corresponding to the part of the first PSI information is determined by the terminal device based on a preset first threshold.

With reference to the second aspect, in some implementations of the second aspect, the method further includes: The network device receives second information of the uplink data packet from the terminal device, where the second information of the uplink data packet includes second PSI information and a proportion of a data amount corresponding to each piece of second PSI information, or a proportion of a data amount corresponding to a part of the second PSI information; and the network device performs packet discarding management on the uplink data packet based on the second information.

With reference to the second aspect, in some implementations of the second aspect, that the network device receives the second information of the uplink data packet from the terminal device includes: When a change of a proportion of a data amount corresponding to the first PSI information exceeds a preset second threshold, the network device receives the second information of the uplink data packet from the terminal device.

With reference to the second aspect, in some implementations of the second aspect, the network device is a first network device, and that the network device receives the first information of the uplink data packet from the terminal device includes: The first network device receives the first information of the uplink data packet from the terminal device; and the first network device sends the first information to a second network device through an F1 interface, where the first network device is a distributed unit DU, and the second network device is a central unit CU.

With reference to the second aspect, in some implementations of the second aspect, the network device is a first network device, and that the network device receives the first information of the uplink data packet from the terminal device includes: The first network device receives the first information of the uplink data packet from the terminal device; and the first network device sends the first information to a second network device through an F1 interface, where the first network device is a CU, and the second network device is a DU.

With reference to the second aspect, in some implementations of the second aspect, the network device is a first network device, and that the network device receives the first information of the uplink data packet from the terminal device includes: The first network device receives the first information of the uplink data packet from the terminal device; and the first network device sends the first information to a second network device through an Xn interface, where the first network device is a source base station of the terminal device in a handover scenario, and the second network device is a target base station of the terminal device in the handover scenario.

With reference to the second aspect, in some implementations of the second aspect, the network device is a first network device, and that the network device receives the first information of the uplink data packet from the terminal device includes: The first network device receives the first information of the uplink data packet from the terminal device; and the first network device sends the first information to a second network device through an Xn interface, where the first network device is a primary base station in a DC scenario, and the second network device is a secondary base station in the DC scenario. With reference to the second aspect, in some implementations of the second aspect, the configuration information further indicates the terminal device to send first jitter information of the uplink data packet corresponding to the identifier, and the method further includes: The network device receives the first jitter information from the terminal device, where the first jitter information is calculated by using a duration of a slot corresponding to a first reference subcarrier spacing SCS.

With reference to the second aspect, in some implementations of the second aspect, the method further includes: The network device receives second jitter information from the terminal device, where the second jitter information is calculated by using the duration of the slot corresponding to the first reference SCS or a duration of a slot corresponding to a second reference SCS.

With reference to the second aspect, in some implementations of the second aspect, that the network device receives the second jitter information from the terminal device includes: When a change of the first jitter information exceeds a preset third threshold, or the first reference SCS changes, the network device receives the second jitter information from the terminal device.

Specifically, for related descriptions of the first PSI information, refer to the descriptions of the first PSI information in the first aspect. Details are not described herein again.

According to a third aspect, a first communication device is provided. The first communication device is configured to perform any one of the first aspect and the implementations of the first aspect. Specifically, the first communication device includes a processor and a memory. The memory is configured to store a computer program, and the processor is configured to invoke and run the computer program from the memory, to enable the first communication device to perform any one of the first aspect and the implementations of the first aspect.

According to a fourth aspect, a second communication device is provided. The second communication device is configured to perform any one of the second aspect and the implementations of the second aspect. Specifically, the second communication device includes a processor and a memory. The memory is configured to store a computer program, and the processor is configured to invoke and run the computer program from the memory, to enable the second communication device to perform any one of the second aspect and the implementations of the second aspect.

According to a fifth aspect, a communication apparatus is provided. The communication apparatus is configured to perform the method provided in any one of the first aspect and the implementations of the first aspect. Specifically, the communication apparatus may include a unit and/or a module (for example, a processing unit and a transceiver unit) configured to perform the method provided in any one of the first aspect and the implementations of the first aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, a communication apparatus is provided. The communication apparatus is configured to perform the method provided in any one of the second aspect and the implementations of the second aspect. Specifically, the communication apparatus may include a unit and/or a module (for example, a processing unit and a transceiver unit) configured to perform the method provided in any one of the second aspect and the implementations of the second aspect.

In an implementation, the communication apparatus is a network device. When the communication apparatus is the network device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the network device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a seventh aspect, this application provides a processor, configured to perform the method provided in the first aspect and/or the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer program product including instructions is provided. When the computer program product runs on a computer, the computer is enabled to perform the method provided in any one of the implementations of the first aspect and/or the second aspect.

According to a ninth aspect, a computer-readable storage medium is provided. The computer-readable storage medium stores a computer program. When the computer program is run on a communication apparatus, the communication apparatus is enabled to perform the method in any one of the implementations of the first aspect and/or the second aspect.

According to a tenth aspect, a communication system is provided, including the first communication device in the third aspect and the second communication device in the fourth aspect.

According to an eleventh aspect, a chip is provided. The chip includes a processor and a communication interface, and the processor reads instructions through the communication interface, to perform the method provided in any one of the implementations of the first aspect and/or the second aspect.

Optionally, in an implementation, the chip further includes a memory, the memory stores a computer program or instructions, and the processor is configured to execute the computer program or the instructions stored in the memory. When the computer program or the instructions are executed, the processor is configured to perform the method provided in any one of the implementations of the first aspect and/or the second aspect.

For technical effects of the second aspect to the eleventh aspect, refer to the technical effects of the first aspect. Details are not described herein again.

### BRIEF DESCRIPTION OF DRAWINGS

FIG. 1 shows a communication system to which an embodiment of this application may be applied;
FIG. 2 is a diagram of an XR downlink service model provided by 3GPP;
FIG. 3 is a diagram of a video coding model applicable to an embodiment of this application;
FIG. 4 is a schematic flowchart of a first data packet processing method 400 according to an embodiment of this application;
FIG. 5 is a schematic flowchart of a second data packet processing method 500 according to an embodiment of this application;
FIG. 6 is a schematic flowchart of a third data packet processing method 600 according to an embodiment of this application;
FIG. 7 is a schematic flowchart of a fourth data packet processing method 700 according to an embodiment of this application;
FIG. 8 is a schematic flowchart of a fifth data packet processing method 800 according to an embodiment of this application;
FIG. 9 is a schematic flowchart of a data packet processing method 900 applied to a network device in a CU-DU split architecture according to an embodiment of this application;
FIG. 10 is a schematic flowchart of a data packet processing method 1000 applied to a handover scenario according to an embodiment of this application;
FIG. 11 is a schematic flowchart of a data packet processing method 1000 applied to a DC scenario according to an embodiment of this application;
FIG. 12 is a block diagram of a communication apparatus 1200 according to an embodiment of this application; and
FIG. 13 is a diagram of another possible structure of the communication apparatus in the foregoing embodiment.

### DESCRIPTION OF EMBODIMENTS

The following describes technical solutions in embodiments of this application with reference to the accompanying drawings.

The technical solutions in embodiments of this application may be applied to various communication systems, for example, non-terrestrial network (non-terrestrial network, NTN) systems such as a satellite communication system, a high altitude platform station (high altitude platform station, HAPS) communication system, and an uncrewed aerial vehicle, an integrated communication and navigation (integrated communication and navigation, ICAN) system, a global navigation satellite system (global navigation satellite system, GNSS), an ultra-dense low earth orbit satellite communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system or an evolved communication system after 5G, vehicle-to-everything (vehicle-to-everything, V2X), where the V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, a long term evolution-vehicle (long term evolution-vehicle, LTE-V) technology, an internet of vehicles, machine type communication (machine type communication, MTC), an internet of things (Internet of things, IoT), a long term evolution-machine (long term evolution-machine, LTE-M) technology, and machine-to-machine (machine-to-machine, M2M).

A terminal device in embodiments of this application may also be referred to as a user equipment (user equipment, UE), an access terminal, a mobile device, a user terminal, a terminal, a wireless communication device, a user agent, or a user apparatus.

For example, some examples of the terminal are a virtual reality (virtual reality, VR) device, an augmented reality (augmented reality, AR) device, a terminal device in a 5th generation (5th generation, 5G) network, or a terminal device in a future evolved public land mobile network (public land mobile network, PLMN). This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothes, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In embodiments of this application, an apparatus configured to implement a function of the terminal device may be the terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

A network device in embodiments of this application may be any communication device that has wireless receiving and sending functions and that is configured to communicate with the terminal device, may be an access network (radio access network, RAN) device deployed on a satellite, or may be an access network device deployed on the ground. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the access network device may be a gNB in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may use a CU-DU split architecture, or may not use a CU-DU split architecture. The gNB may further include an active antenna unit (active antenna unit, AAU).

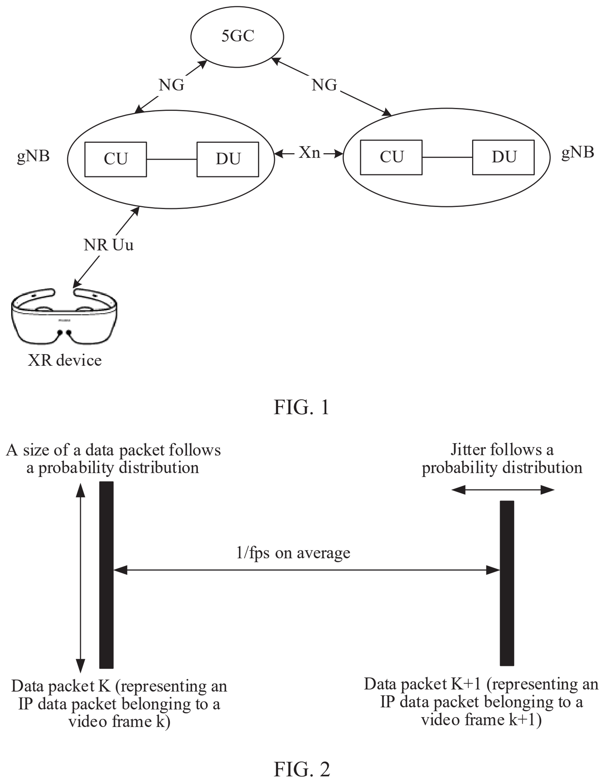

For example, FIG. 1 shows a communication system to which an embodiment of this application may be applied. Specifically, embodiments of this application may be applied to information exchange between a terminal device and a base station, may be applied to information exchange between a base station and a core network, or may be applied to information exchange between base stations.

It may be understood that FIG. 1 is merely an example rather than a limitation on an application scenario of this application. Specifically, a network element in this embodiment of this application includes at least any one of a user equipment, an augmented reality (augmented reality, AR) device/a virtual reality (virtual reality, VR) device/an extended reality (extended reality, XR) device, a wearable device, a smart appliance terminal, a terminal device and a communication module of the terminal device, a mobile phone and a communication module of the mobile phone, a vehicle and a communication module of the vehicle, an information processing device, a display device, a network device (including a core network device), a base station, a TRP, a customer premise equipment (customer premise equipment, CPE), a router, a network access device, and the like. The core network device is a device in a core network (core network, CN) that provides service support for a terminal. Currently, some examples of the core network device are an access and mobility management function (access and mobility management function, AMF) entity, a session management function (session management function, SMF) entity, and a user plane function (user plane function, UPF) entity. Examples are not listed one by one herein. The AMF entity may be responsible for access management and mobility management of the terminal. The SMF entity may be responsible for session management, for example, session establishment of a user. The UPF entity may be a function entity on a user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

In terms of Uu (UTRAN-to-terminal device) air interface transmission, two parties of wireless communication include a network device and a user communication device. In terms of SL air interface transmission, a receive end and a transmit end of wireless communication are both user communication devices. In a diagram of a system architecture shown in FIG. 1, a network device may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a future wireless communication system. When the network device is a gNB, a CU-DU split architecture may be used, or a CU-DU split architecture may not be used. The user equipment may be a vehicle-mounted communication module or another embedded communication module, or may be a hand-held communication device of the user, including a mobile phone, a tablet computer, an XR device, or the like. Sidelink (sidelink, SL) communication may be performed between a user communication device (for example, an XR device) and a user communication device (for example, an XR device).

For ease of understanding of embodiments of this application, concepts and technologies in embodiments of this application are first briefly described.
1. XR: The XR may be a real and virtual combined environment generated by using a computing technology and a wearable device, and interaction between a person and a machine, and specifically includes the following several typical forms: VR, AR, and MR. The XR is one of 5G multimedia applications that are mainly considered in the industry field currently. The 3rd generation partnership project (the 3rd generation partnership project, 3GPP) Rel-17 performs modeling and analysis on service features of the XR. Usually, an XR service periodically generates data frames based on a specific frame rate. An AR or XR service may have the following main service features:
   (1) Frame rate: The frame rate may be 60 frames per second (frames per second, fps), that is, 60 frames of video images are generated per second, and one video frame appears approximately every 16.67 ms; and a transmission rate is 20 megabits per second (megabits per second, Mbps), 45 Mbps, or the like. Alternatively, the frame rate may be 120 fps, that is, 120 frames of video images per second, and one video frame appears approximately every 8.33 ms. This is not limited in this application.
   (2) Jitter (jitter): Encoding of a data frame may have a specific delay. Consequently, jitter occurs at a moment at which the data frame arrives at an air interface. Usually, the jitter may be considered to follow a truncated Gaussian distribution, and a truncated range is approximately [-4, 4] ms. That is, a data arrival moment in each periodicity may be advanced or delayed by at most 4 ms in the periodicity. As shown in FIG. 2, it can be learned from FIG. 2 that a size of an XR service data packet follows a specific probability distribution, the data packet arrives at a base station side based on a periodicity of 1/fps on average, and jitter at an arrival moment of the data packet follows a specific probability distribution.
   (3) Frame size variation: A size of a data frame is not fixed, and generally follows the truncated Gaussian distribution. A mean may be represented as mean=R×1e6/F/8, where F is a frame rate, and R is a rate of a data flow. For example, F=60 fps, and R=20 Mbps. In this case, mean=41.67 KBytes. Generally, the size of the data frame is between 0.5*mean and 1.5*mean.
2. XR service data packet: The XR service data packet is a data packet of an XR service. The XR service may periodically generate data. For example, an uplink AR service periodically generates a data frame, transmission of the data frame may be performed by using a plurality of data packets at an access layer, and these data packets may form one or more protocol data unit (protocol data unit, PDU) sets (sets). Generally, a network has a specific requirement on a transmission delay of each PDU set. For example, a transmission delay requirement on the PDU set is a PDU set delay budget (PDU set delay budget, PSDB). The PSDB is merely an example. This is not limited in this application.

It may be understood that one PDU set may correspond to one or more data packets. One PDU set includes data corresponding to one unit of information at an application layer, and one unit of information at the application layer, for example, one video frame, one video coding slice, or one video coding block, is a minimum granularity of encoding and decoding at the application layer. If one PDU set corresponds to a plurality of data packets, transmission of the plurality of data packets may be sequentially performed at the access layer by using a data packet as a granularity.

For example, the PDU set may include one or more PDUs. The one or more PDUs are configured to carry a payload of one unit of information generated at an application level. The unit of information at the application level is, for example, a frame or a video slice of the XR service. In some implementations, an application layer needs all PDUs in the PDU set to use a corresponding unit of information. In some implementations, when a part of PDUs are missing, the application layer may restore a corresponding unit of information.

Specifically, in the XR service, data of different importance degrees may appear in a same data flow. This is caused by a coding scheme of an application. An XR video service is used as an example. An application may use an inter prediction coding scheme for a part of video frames during data coding, to compress an amount of data to be transmitted. To be brief, in this type of coding scheme, based on a fact that most content in adjacent video images does not change, only data of a part that changes in the image is transmitted, and for a part that does not change, previous data is directly used. For example, in a live video image, a background usually does not change. Therefore, complete data needs to be transmitted only when a 1^{st} frame of video is transmitted. For a subsequent video frame, only data of a foreground person change needs to be transmitted, and background data does not need to be transmitted. A player at a receive end may directly use the background data of the 1^{st} frame to generate an image of a subsequent video frame.

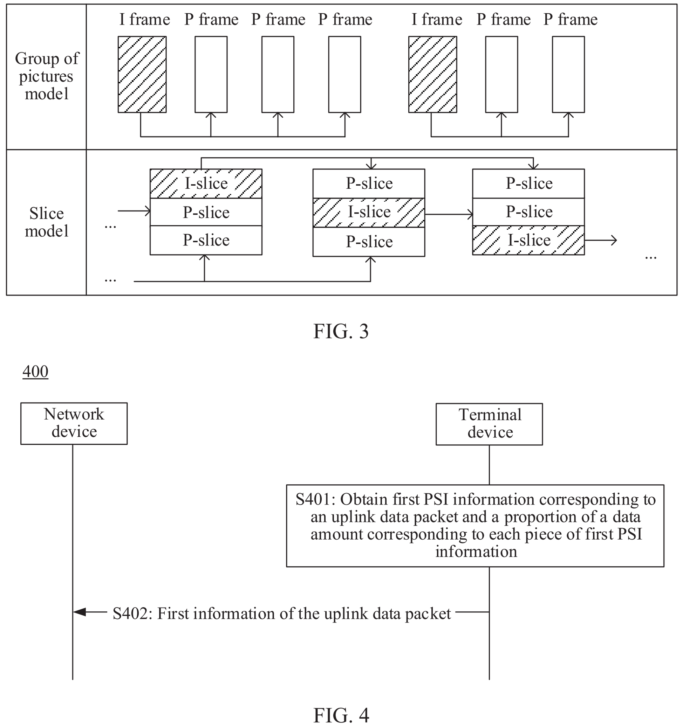

A coding scheme having the foregoing feature is shown in FIG. 3. A classic coding scheme is coding based on a group of pictures (group of pictures, GOPs). In this coding scheme, one GOP includes several consecutive video frames. A 1^{st} frame is referred to as an intra-coded (intra-coded picture, I) frame, uses intra-coding, includes complete image information, and can be independently encoded and decoded. A remaining frame is referred to as a predictive-coded (predictive-coded picture, P) frame, uses predictive coding, includes only a part of image information, and can be encoded and decoded only by using a previous frame.

In another similar coding scheme, one video frame is divided into a plurality of video slices (slices), a part of slices use intra-coding and are referred to as I-slices, and a part of slices use predictive coding and are referred to as P-slices. Encoding and decoding of a P-slice in a latter frame need to depend on an I-slice in a corresponding position in a former frame.

One frame or one slice may correspond to one or more PDU sets when being transmitted in a wireless network.

A coding model of an XR video reflects unequal importance of data. Correct decoding of a P frame/P-slice depends on correct decoding of an I frame/I-slice. Therefore, during data transmission, I frame/I-slice data has higher importance. When network congestion occurs, reliable transmission of the I frame/I-slice should be preferentially guaranteed to ensure service experience.

To distinguish between unequal importance of different data in a same data flow, 3GPP proposes a concept of PDU set importance (importance). According to a stipulation in 3GPP protocol 23.700, a quality of service (quality of service, QoS) flow of an XR service may include PDU sets of different importance degrees, and the PDU sets are identified by using the PDU set importance (PDU set importance, PSI). For example, in an XR video stream, PSI of a PDU set corresponding to an I frame/I-slice may be higher than PSI of a PDU set corresponding to a P frame/P-slice because encoding and decoding of the P frame/P-slice need to depend on those of the I frame/I-slice. Therefore, I frame/I-slice data has higher importance.

According to a definition in 3GPP, the PSI has 16 levels in total, whose values range from 0 to 15. A smaller PSI value indicates higher importance of a PDU set. In downlink, PSI of each PDU set is provided by a core network for an access network. In uplink, PSI is identified by UE.

Because an XR data flow includes data with different importance, when network congestion occurs, transmission of data with high importance should be preferentially guaranteed. Therefore, it is proposed in a protocol that when network congestion occurs, transmission of a data packet with low importance may be preferentially abandoned. In downlink, a network device may independently implement discarding. To be specific, the network device may actively discard some data with low importance after finding congestion. In uplink, when finding congestion, the network device may indicate a terminal device (for example, the UE) to discard data with low importance, to relieve pressure of a transmission resource. In this way, more resources can be used to perform transmission of data with high importance, to ensure user experience as much as possible.

In the foregoing mechanism, for the downlink part, execution needs to be performed only by the network device. This scenario is relatively simple. For the uplink part, the network device needs to deliver an instruction to the terminal device to perform corresponding packet discarding control. In an implementation, when network congestion occurs, the network device indicates the terminal device to discard data whose PSI is greater than a threshold.

However, it may be understood that PSI of uplink data is identified and determined by the terminal device, and is not carried in a packet header to the network device. Therefore, in an uplink service, the network device cannot learn in advance of data at a specific PSI level in a data packet transmitted by the terminal device. In this case, it is difficult for the network device to perform correct and proper packet discarding indication when network congestion occurs, so that a proper terminal device discards proper data to relieve the network congestion.

In an actual application scenario, when the network device finds network congestion, the network device first needs to determine a specific user who is indicated to perform a packet discarding operation. Because there are a plurality of types of users in the network, a service flow of a part of users may not include an unimportant data packet, for example, a part of users do not use an inter-frame dependency coding scheme. If the network device indicates this type of user to discard a packet, because there is no data with low importance, this type of user may not discard any data packet. Consequently, the network congestion cannot be relieved as expected. Even if this type of user is forced to discard a part of data, because all data is of same importance to the users, the discarded data may greatly affect experience of these users. Because the network device does not know PSI information of each user, the network device cannot identify specific users having data with low importance, and the foregoing case is inevitable.

In addition, the network device further needs to indicate, to a user that needs to discard a packet, data corresponding to specific PSI levels to be discarded. For example, a data flow of a user includes data whose PSI=5 and data whose PSI=8, but the network device indicates the user to discard data whose PSI is greater than 10. In this case, the user does not discard any data, and the network congestion cannot be relieved as expected either. This case may also occur because the network device does not know the PSI information of the user.

In conclusion, because the network device does not have any information about uplink PSI of the terminal device, when network congestion occurs, it is difficult for the network device to make a proper decision to indicate the terminal device to discard a data packet, so as to achieve an objective of relieving the congestion.

In view of this, this application provides a data packet processing method and a communication apparatus, so that during uplink data packet transmission, when network congestion occurs, the network device can properly indicate, to the terminal device, a data packet that needs to be discarded, to guarantee transmission of a data packet with high importance and also relieve the network congestion.

FIG. 4 is a schematic flowchart of a first data packet processing method 400 according to an embodiment of this application. As shown in FIG. 4, the schematic flowchart is shown by using interaction between a network device and a terminal device. Steps performed by the terminal device and/or the network device may be performed by a module or a unit in the terminal device and/or the network device, for example, performed by a chip in the terminal device or the network device. Specifically, the method includes the following plurality of steps.

S401: The terminal device obtains first PSI information corresponding to an uplink data packet and a proportion of a data amount corresponding to each piece of first PSI information.

Specifically, when the terminal device needs to send the uplink data packet to the network device, the terminal device first obtains the first PSI information corresponding to the uplink data packet to be sent and the proportion of the data amount corresponding to each piece of first PSI information. The proportion of the data amount corresponding to each piece of first PSI information is a proportion of the data amount corresponding to each piece of first PSI information in a total data amount corresponding to the uplink data packet.

In some embodiments, the first PSI information may be a PSI level. For example, when data that is sent by the terminal device and that belongs to a QoS flow #1 includes five data packets, PSI levels corresponding to the five data packets and a data amount of each data packet that are obtained by the terminal device may be respectively: a data packet #1 (PSI=1, and a size is 1000 bytes), a data packet #2 (PSI=2, and a size is 500 bytes), a data packet #3 (PSI=2, and a size is 500 bytes), a data packet #4 (PSI=3, and a size is 1000 bytes), and a data packet #5 (PSI=1, and a size is 1000 bytes). In this case, each piece of first PSI information and the proportion of the data amount corresponding to each piece of first PSI information that are obtained by the terminal device are respectively: A proportion of data whose PSI=1 is 50%, a proportion of data whose PSI=2 is 25%, and a proportion of data whose PSI=3 is 25%.

In some other embodiments, the first PSI information may be a range of a PSI level. For example, data that is sent by the terminal device and that belongs to a QoS flow #1 includes data of the following types of PSI: A proportion of data whose PSI=1 is 10%, a proportion of data whose PSI=2 is 10%, a proportion of data whose PSI=3 is 10%, a proportion of data whose PSI=4 is 10%, a proportion of data whose PSI=5 is 10%, a proportion of data whose PSI=6 is 10%, a proportion of data whose PSI=7 is 10%, a proportion of data whose PSI=8 is 10%, a proportion of data whose PSI=9 is 10%, and a proportion of data whose PSI=10 is 10%. In this case, when collecting statistics about the QoS flow #1, the terminal device may separately obtain a proportion of data whose PSI is 0<PSI≤ 3 in a total data amount, a proportion of data whose PSI is 3<PSI≤ 6 in the total data amount, and a proportion of data whose PSI is 7<PSI≤10 in the total data amount. In this case, each piece of first PSI information and the proportion of the data amount corresponding to each piece of first PSI information that are obtained by the terminal device are respectively: A proportion of data whose PSI is 0<PSI≤3 in the total data amount is 30%, a proportion of data whose PSI is 3<PSI≤6 in the total data amount is 30%, and a proportion of data whose PSI is 7<PSI≤10 in the total data amount is 40%.

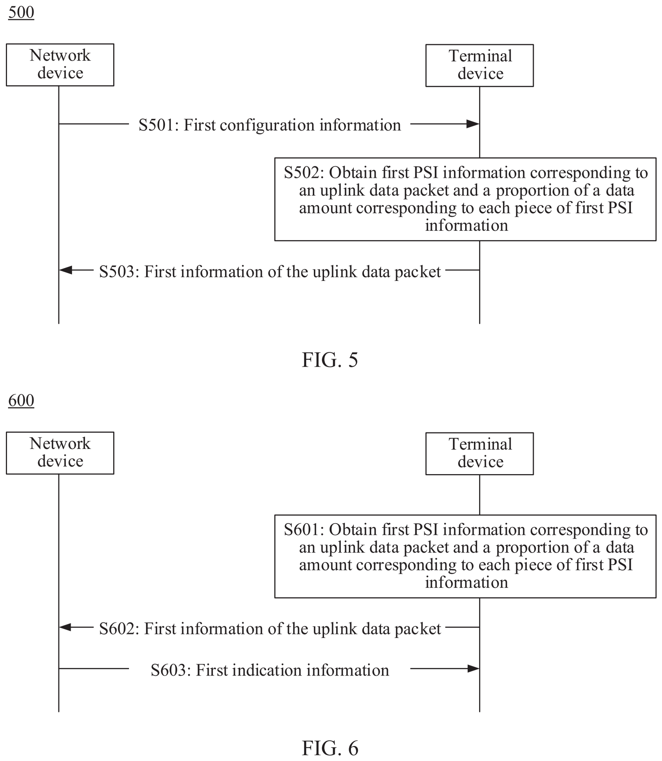

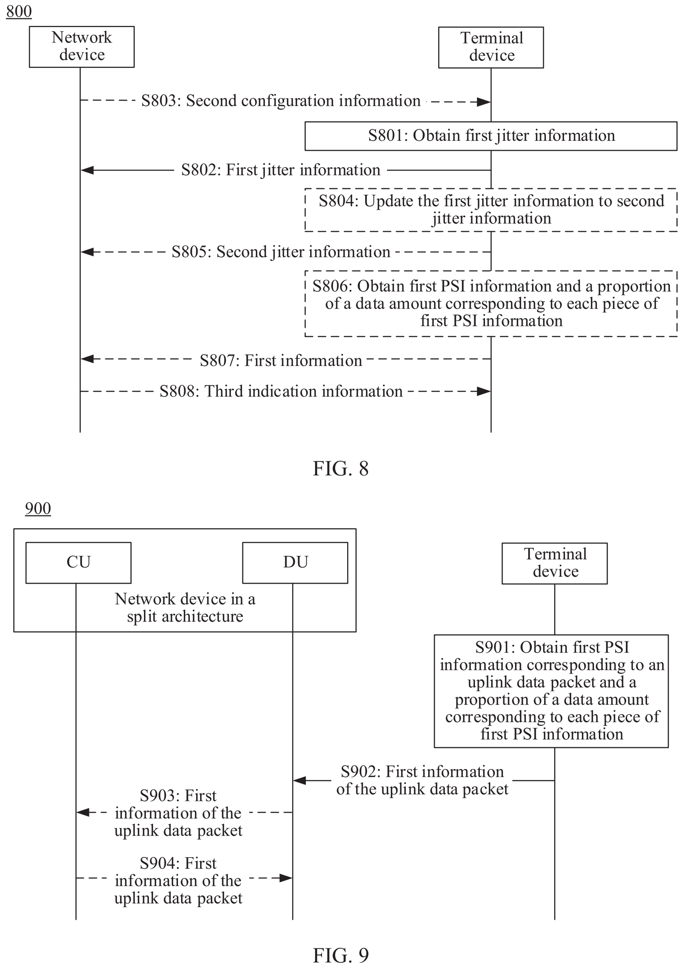

It may be understood that the terminal device may classify PSI levels based on a preset first threshold. For example, in the foregoing example, the first threshold selected by the terminal device for classification into ranges of the PSI levels is 3 or 7. It should be noted that the first threshold for classifying the PSI levels by the terminal device may be preconfigured by the network device for the terminal device, for example, the first threshold (for example, 3 or 7) for classifying the levels is sent to the terminal device via configuration information (for example, first configuration information used to configure an identifier of a data packet in S501 in the following method shown in FIG. 5, configuration information used to configure a first reference SCS or an ID of a BWP corresponding to a first reference SCS in FIG. 8, or configuration information sent by another network device to the terminal device), so that after receiving the first threshold, the terminal device classifies the obtained PSI levels into different level ranges based on the first threshold. Alternatively, the first threshold for classifying the PSI levels may be determined by the terminal device, or may be predefined in a protocol. This is not limited in this application. In addition, there may be one or more first thresholds.

It should be noted that, in the solution of this application, PSI information corresponding to a data packet corresponds to PSI information of a PDU set. For example, when PSI of a PDU set is x, PSI of all data packets in the PDU set is x. It may be understood that one QoS flow, one logical channel (logical channel, LCH), or one data radio bearer (data radio bearer, DRB) may include one or more PDU sets. Therefore, one QoS flow, one LCH, or one DRB may correspond to one or more pieces of PSI information. Therefore, in the solution of this application, the terminal device may obtain one or more pieces of first PSI information. This is not limited in this application.

In some embodiments, the terminal device obtains, through statistics collection, the first PSI information corresponding to the uplink data packet and the proportion of the data amount corresponding to each piece of first PSI information. For example, when the terminal device collects statistics about five data packets (for example, belonging to a same QoS flow) in one statistical duration, and the five data packets are respectively a data packet #1 (PSI=1, and a size is 1000 bytes), a data packet #2 (PSI=2, and a size is 500 bytes), a data packet #3 (PSI=2, and a size is 500 bytes), a data packet #4 (PSI=3, and a size is 1000 bytes), and a data packet #5 (PSI=1, and a size is 1000 bytes), a statistical result is: Data whose PSI=1 is 2000 bytes, data whose PSI=2 is 1000 bytes, and data whose PSI=3 is 1000 bytes. Therefore, the terminal device may learn that there are three PSI levels in data, the three PSI levels are respectively a level 1, a level 2, and a level 3, and proportions of data amounts corresponding to PSI=1, PSI=2, and PSI=3 are respectively 50%, 25%, and 25%. Optionally, a statistical duration of the terminal device may be independently determined by the terminal device. When the terminal device determines that statistical time is long enough, and a statistical result is representative (for example, the terminal device considers that a PSI level obtained through statistics collection and a corresponding proportion may represent a status of an entire QoS flow), the terminal device stops the statistics collection. For example, the statistical duration of the terminal device may be time that covers one GOP.

In some other embodiments, the first PSI information corresponding to the uplink data packet and the proportion of the data amount corresponding to each piece of first PSI information that are obtained by the terminal device are directly obtained from an application layer of the terminal device. For example, for a video application, the application layer (for example, application software) of the terminal device may determine importance of data and proportions of different data based on a coding scheme, and transfer the foregoing information to a processing device of the terminal device in a cross-layer interaction manner.

S402: The terminal device sends first information of the uplink data packet to the network device.

Specifically, after the terminal device obtains the first PSI information corresponding to the uplink data packet and the proportion of the data amount corresponding to each piece of first PSI information, the terminal device sends the first information of the uplink data packet to the network device. Correspondingly, the network device receives the first information. The first information includes the first PSI information and the proportion of the data amount corresponding to each piece of first PSI information, or a proportion of a data amount corresponding to a part of the first PSI information.

In some embodiments, if a quantity of first PSI levels corresponding to the uplink data packet obtained by the terminal device is small, for example, only data whose PSI=1 is included or only data whose PSI=1 and data whose PSI=2 are included, or a range of a first PSI level corresponding to the uplink data packet obtained by the terminal device is small, for example, the range of the first PSI level corresponding to the uplink data packet is only 0<PSI≤3, the terminal device may send all the first PSI information to the network device, so that the network device can clearly know importance degrees of the data included in the uplink data packet and a proportion relationship between the data of the importance degrees.

In some other embodiments, if a quantity of first PSI levels corresponding to the uplink data packet obtained by the terminal device is large, or a range of a first PSI level is large, to reduce reported information and reduce resource occupation, the terminal device may report only the proportion of the data amount corresponding to the part of the first PSI information. This process may be understood as follows: The terminal device classifies the data in the data packet into important data and unimportant data, and sends a proportion of the important data in the total data or a proportion of the unimportant data in the total data to the network device, so that a network knows the proportion of the important data or the proportion of the unimportant data. The terminal device may determine, as an unimportant data packet, a part of data packets for which basic user experience can still be ensured even if the part of data packets are discarded. Data for which user experience is definitely affected and even a service function cannot be implemented if the data is discarded is considered as the important data. It may be understood that, in this scenario, the network device does not need to clearly know a PSI level corresponding to the data packet, but determines proportions of the two types of data by using a proportion reported by the terminal device. For example, when the terminal device reports the proportion of the important data, if congestion occurs in a network system, the network device may determine, based on a value of the data proportion, whether a currently available resource can carry the important data, and determine whether to discard or receive an unimportant data packet corresponding to the important data (for example, by indicating the terminal device to discard or continue to send the unimportant data packet). Alternatively, when the terminal device reports the proportion of the unimportant data, if congestion occurs in a system, when the network device may determine, based on a value of the data proportion, that the network congestion can be relieved by discarding the part of data, the network device may determine to discard the part of unimportant data packets. It may be understood that the terminal device may alternatively send both the proportion of the important data and the proportion of the unimportant data to the network device. Although this solution occupies some uplink resources compared with a solution in which only a proportion of one type of data is sent, in comparison with sending all PSI levels, sending the proportions of the two types of data still has an advantage of saving resources, and in addition, the network device does not need to calculate a proportion of the other type of data. Therefore, this also falls within the protection scope of this application.

In some other embodiments, when the terminal device sends, to the network device, the proportion of the data amount corresponding to the part of the first PSI information, the terminal device may further send, to the network device, the part of the first PSI information corresponding to the reported proportion of the data amount. For example, if the terminal device determines to send the proportion corresponding to the unimportant data to the network device, and it is assumed that the terminal device determines that data whose first PSI level is greater than 7 is the unimportant data and that a corresponding data amount is 60%, the terminal device may send 60% to the network device, and also report that a range of the first PSI level corresponding to the 60% data is 7<PSI≤15.

Optionally, the terminal device sends the first information to the network device via a medium access control control element (medium access control control element, MAC CE), a radio resource control (radio resource control, RRC) message, or another message. This is not limited in this application.

In an implementation, when including the first information in the RRC message, the terminal device may report the first information to the network device by using code in the following three forms.

### (1) The terminal device sends a first PSI level

### First PSI information

```
          {
              QFI/LCH/DRB ID;//indicating a first PSI list of a specific QoS flow/LCH/DRB
              that information reported by the terminal device is about
              {
                First PSI level #1 Proportion of a data amount corresponding to the first PSI
 level #1
                First PSI level #2 Proportion of a data amount corresponding to the first PSI
 level #2
                First PSI level #3 Proportion of a data amount corresponding to the first PSI
 level #3 ...
              }
          }
```

### (2) The terminal device sends a range of a first PSI level

### First PSI information

```
          {
              QFI/LCH/DRB ID;//indicating a first PSI list of a specific QoS flow/LCH/DRB
              that information reported by the terminal device is about
              {
                Range #1 of the first PSI level Proportion of a data amount corresponding to
                the range #1 of the first PSI level
                Range #2 of the first PSI level Proportion of a data amount corresponding to
                the range #2 of the first PSI level
                Range #3 of the first PSI level Proportion of a data amount corresponding to
                the range #3 of the first PSI level
          ... } }
```

### (3) The terminal device sends a range of a first PSI level

### First PSI information

```
          {
              QFI/LCH/DRB ID;//indicating a first PSI list of a specific QoS flow/LCH/DRB
              that information reported by the terminal device is about
              {
                Proportion of a data amount corresponding to important data/Proportion of a
 data amount corresponding to unimportant data
              }
          }
```

Based on the foregoing solution, in this application, the terminal device sends the first information to the network device, so that the network device can know distribution of the data in the uplink data packet. Therefore, when network congestion occurs, the uplink data packet can be properly managed. This improves performance of the network device, and ensures stability of data transmission.

It can be learned from the foregoing related descriptions of FIG. 3 that a PSI level can be used to identify an importance degree of data, only for a data flow in a specific application implementation. Therefore, to improve efficiency of obtaining the first PSI information by the terminal device, the terminal device needs to determine, before obtaining the first PSI information, specific QoS flows, LCHs or DRBs whose first PSI information and a proportion corresponding to each piece of first PSI information that need to be obtained. In view of this, FIG. 5 is a schematic flowchart of a second data packet processing method 500 according to an embodiment of this application. As shown in FIG. 5, the schematic flowchart is shown by using interaction between a network device and a terminal device. Steps performed by the terminal device and/or the network device may be performed by a module or a unit in the terminal device and/or the network device, for example, performed by a chip in the terminal device or the network device. Specifically, the method includes the following plurality of steps.

S501: The network device sends first configuration information to the terminal device.

Specifically, when the network device needs to obtain first information of an uplink data packet, the network device sends the first configuration information to the terminal device, where the first configuration information includes an identifier corresponding to the uplink data packet, and the first configuration information indicates the terminal device to report the first information of the uplink data packet corresponding to the identifier.

Optionally, the identifier corresponding to the uplink data packet is a flow identifier of a QoS flow, an identifier of an LCH, an identifier of a DRB, or the like. This is not limited in this application. It may be understood that the first configuration information sent by the network device may include one or more identifiers. When the first configuration information includes a plurality of identifiers, the terminal device may separately obtain first PSI information of uplink data packets corresponding to the plurality of identifiers and a proportion of a data amount corresponding to each piece of first PSI information, and report, to the network device, first information of the data packets corresponding to the identifiers.

Optionally, the first configuration information is carried in a MAC CE, or carried in an RRC message, or another message. This is not limited in this embodiment of this application. In addition, the first configuration information may be delivered in one message/one piece of information, or may be delivered in several messages/several pieces of information.

S502: The terminal device obtains first PSI information corresponding to the uplink data packet and a proportion of a data amount corresponding to each piece of first PSI information. For related descriptions of this step, refer to S401. Details are not described herein again.

S503: The terminal device sends the first information of the uplink data packet to the network device. For related descriptions of this step, refer to S402. Details are not described herein again.

Based on the foregoing solution, the network device indicates, by using the configuration information, the terminal device to obtain the first PSI information of the specific data packet and the proportion of the data amount corresponding to each piece of first PSI information. This prevents the terminal device from obtaining first PSI information of all uplink data packets, simplifies an obtaining procedure of the terminal device, and improves obtaining efficiency of the terminal device.

When network congestion occurs, the network device needs to indicate the terminal device to discard a data packet, to relieve the network congestion. For this scenario, FIG. 6 is a schematic flowchart of a third data packet processing method 600 according to an embodiment of this application. As shown in FIG. 6, the schematic flowchart is shown by using interaction between a network device and a terminal device. Steps performed by the terminal device and/or the network device may be performed by a module or a unit in the terminal device and/or the network device, for example, performed by a chip in the terminal device or the network device. Specifically, the method includes the following plurality of steps.

S601: The terminal device obtains first PSI information corresponding to an uplink data packet and a proportion of a data amount corresponding to each piece of first PSI information. For related descriptions of this step, refer to S401. Details are not described herein again.

S602: The terminal device sends first information of the uplink data packet to the network device. For related descriptions of this step, refer to S402. Details are not described herein again.

S603: The network device sends first indication information to the terminal device.

When the network device determines that a congestion phenomenon occurs in a current network, the network device sends the first indication information to the terminal device, where the first indication information indicates the terminal device to discard a data packet corresponding to a part of the first PSI information, or the first indication information indicates the terminal device to discard a data packet that is in the uplink data packet and that is other than the data packet corresponding to the part of the first PSI information.

In some embodiments, if the terminal device sends, to the network device in S602, the first PSI information of the uplink data packet and the proportion of the data amount corresponding to each piece of first PSI information, the first indication information sent by the network device to the terminal device may carry a part of the first PSI information (including a part of first PSI levels or a range of a part of first PSI levels). After receiving the first indication information, the terminal device discards, based on the part of the first PSI information carried in the first indication information, a data packet corresponding to the part of the first PSI information.

In some other embodiments, if the terminal device sends, to the network device in S602, a proportion of a data amount corresponding to a part of the first PSI information of the uplink data packet, the first indication information sent by the network device to the terminal device may indicate to discard a data packet corresponding to the part of the first PSI information, or indicate to discard a data packet that is in the uplink data packet and that is other than the data packet corresponding to the part of the first PSI information. It may be understood that when the data packet corresponding to the part of the first PSI information reported by the terminal device is unimportant data, the first indication information indicates to discard the data packet corresponding to the part of pieces the first PSI information. When the data packet corresponding to the part of the first PSI information reported by the terminal device is important data, the first indication information indicates to discard the data packet that is in the uplink data packet and that is other than the data packet corresponding to the part of the first PSI information.

Based on the foregoing solution, the network device determines content of the first indication information based on the first information reported by the terminal device, and indicates, by using the first indication information, the terminal device to discard a part of data packets. This can ensure reliability of data packet management performed by the network device, and improve performance of data packet management performed by the network device.

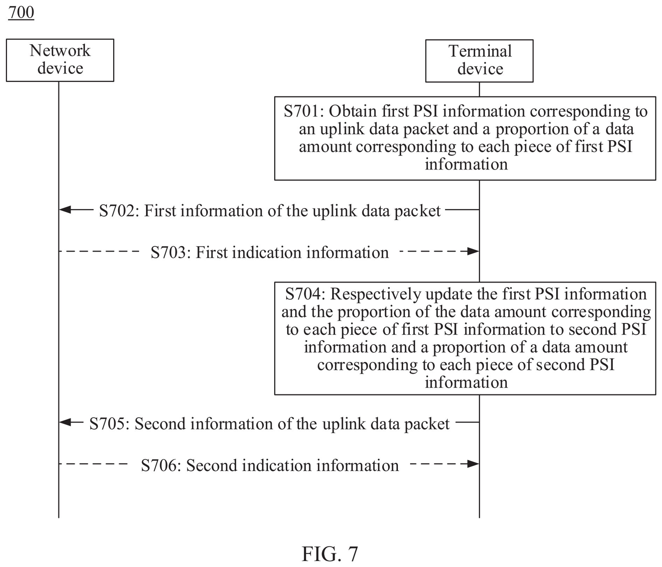

It may be understood that the first PSI information and the proportion of the data amount corresponding to the first PSI information may change. In this case, the terminal device may send, to the network device, second PSI information obtained through updating and a proportion of a data amount corresponding to the second PSI information. Specifically, FIG. 7 is a schematic flowchart of a fourth data packet processing method 700 according to an embodiment of this application. Similarly, the schematic flowchart is shown by using interaction between a network device and a terminal device. Steps performed by the terminal device and/or the network device may be performed by a module or a unit in the terminal device and/or the network device, for example, performed by a chip in the terminal device or the network device. Specifically, the method includes the following plurality of steps. For S701 and S702, refer to S401 and S402 respectively. Optionally, the method 700 may further include S703. For related descriptions of S703, refer to S603. Details are not described herein again.

S704: The terminal device respectively updates first PSI information and a proportion of a data amount corresponding to each piece of first PSI information to second PSI information and a proportion of a data amount corresponding to each piece of second PSI information.

Specifically, after the terminal device reports the first PSI information to the network device, the terminal device may still continue to obtain PSI information, for example, continue to perform statistics collection or continuously obtain the PSI information from an application layer.

In some embodiments, after the terminal device determines that the obtained PSI information changes relative to the first PSI information (including that the first PSI information changes, or a proportion of a data amount corresponding to one or more pieces of first PSI information changes), the terminal device respectively updates the first PSI information and the proportion of the data amount corresponding to each piece of first PSI information to the second PSI information and the proportion of the data amount corresponding to each piece of second PSI information. For example, if the first PSI information and the proportion of the data amount corresponding to each piece of first PSI information are respectively (PSI=1, 50%), (PSI=2, 25%), and (PSI=3, 25%), when the terminal device continues to perform statistics collection or continues to obtain the PSI information from the application layer, and finds that a data proportion corresponding to PSI=1 decreases to 40%, and there is data whose PSI=4, and a proportion is 10%, the terminal device updates the first PSI information and the proportion of the data amount corresponding to each piece of first PSI information to the second PSI information and the proportion of the data amount corresponding to each piece of second PSI information, that is, updates (PSI=1, 50%), (PSI=2, 25%), and (PSI=3, 25%) to (PSI=1, 40%), (PSI=2, 25%). (PSI=3, 25%), and (PSI=4, 10%). It should be understood that the changes of the first PSI information and the proportion of the data amount corresponding to each piece of first PSI information are merely an example, and do not constitute a limitation on the protection scope of this application. For example, when the first PSI information does not change, but the proportion corresponding to each piece of first PSI information changes, the terminal device may also replace the PSI information and the corresponding proportion before the change with PSI information and a proportion after the change.

In some other embodiments, when the terminal device determines that a change of a data proportion corresponding to one or more pieces of first PSI information exceeds a preset second threshold, the terminal device respectively updates the first PSI information and the proportion of the data amount corresponding to each piece of first PSI information to the second PSI information and the proportion of the data amount corresponding to each piece of second PSI information. For example, it is assumed that the second threshold used by the terminal device is 15%. If the first PSI information and the proportion of the data amount corresponding to each piece of first PSI information are respectively (PSI=1, 50%), (PSI=2, 25%), and (PSI=3, 25%), when the terminal device continues to perform statistics collection or continues to obtain the PSI information from the application layer, the terminal device replaces the PSI information and the corresponding proportion before the change with PSI information and a proportion after the change only when a change of a proportion of one or more of PSI=1, PSI=2, or PSI=3 exceeds 15%.

Optionally, the second threshold is preconfigured by the network device for the terminal device. In an implementation, the second threshold may be carried in configuration information sent by the network device to the terminal device, for example, the first configuration information, the following second configuration information, or other configuration information. For example, if the second threshold is carried in the first configuration information, and when the first configuration information, in addition to indicating an identifier corresponding to the uplink data packet, further indicates that a change of a proportion of a data amount corresponding to a part of the first PSI information obtained by the terminal device exceeds the second threshold, the terminal device updates the first PSI information and each piece of first PSI information, and reports second information obtained through updating. Alternatively, for example, configuration information carrying the second threshold may be different from the first configuration information. In this case, the network device sends a plurality of pieces of configuration information to separately configure the second threshold and the identifier of the uplink data packet. This is not limited in this application. Optionally, the second threshold is set by the terminal device, or is predefined in a protocol. This is not limited in this application.

S705: The terminal device sends second information of the uplink data packet to the network device.

Specifically, after the terminal device updates the first PSI information and the proportion of the data amount corresponding to each piece of first PSI information, the terminal device sends the second information of the uplink data packet to the network device. Correspondingly, the network device receives the second information. The second information includes the second PSI information and the proportion of the data amount corresponding to each piece of second PSI information, or a proportion of a data amount corresponding to a part of the second PSI information.

It may be understood that a process in which the terminal device sends the second information of the uplink data packet to the network device is the same as a process in which the terminal device sends the first information, but content reported by the terminal device to the network device changes. Therefore, for S705, refer to related descriptions of S402. Details are not described herein again.

Optionally, the method 700 further includes S706. The network device sends second indication information to the terminal device. To be specific, after the first information is updated to the second information, if network congestion occurs, the network device may perform packet discarding management on the uplink data packet based on the second information by using the second indication information. It may be understood that a process in which the network device sends the second indication information to the terminal device is the same as a process in which the network device sends the first indication information to the terminal device. Content of the second indication information may also vary based on content of the second information reported by the terminal device. For details, refer to related descriptions of S603. Details are not described herein again.

It may be understood that, in FIG. 7, the technical solution provided in this application is described only by using an example in which the terminal device updates the first information once. In some other embodiments, the terminal device may further continue to update the second information, and report updated second information to the network device. This is not limited in this application.

In addition to the PSI information, currently, some information, for example, jitter information of uplink data, may affect packet discarding and scheduling decision-making of the network device during congestion.

For example, when three users are simultaneously performing uplink XR services in a network, data of the services periodically arrives at the network device, and an amount of data that is of each user and that arrives at the network device each time is equal. It is assumed that periodicities of the uplink data of the three services are all 20 ms, and it is specified that start moments of the services are the same, and are denoted as 0 ms. If data jitter is not considered, uplink data of the three users arrives at the network device at moments such as 20 ms, 40 ms, and 60 ms, and the network device can enable all the users to have satisfactory experience only when the network device schedules all the data of the three users within 5 ms. However, due to network congestion and limited uplink resources, it is assumed that the network device can schedule a data amount of only one user within 5 ms. If packet discarding is not indicated, it is very likely that only a part of data of each of three user equipments is scheduled but the data of each of the three user equipments cannot be scheduled completely. Consequently, all the three users are dissatisfied. In this case, the network may indicate two of the users to discard a packet, to ensure that one user is satisfied. However, if the network device can fully consider, when making a packet discarding decision, jitter that occurs when user data arrives, the data scheduling process may be optimized. The foregoing three users are still used as an example. It is assumed that a user A has jitter whose range is [-5, 5] ms. To be specific, data arrival may be at most 5 ms earlier or at most 5 ms later than a periodicity moment. In other words, data of the user may arrive within ranges of 15 ms to 25 ms, 35 ms to 45 ms, and 55 ms to 65 ms. In this case, there is a high probability that the data of the user A is staggered with data of the other two users. Therefore, even if the network does not discard the data of the user A, data transmission of the other two users is not affected. In this case, the network only needs to indicate one of two users without jitter to discard data, so that there are finally two satisfied users. In comparison with a case in which the data jitter is not considered, considering a jitter status of uplink data can improve properness of packet discarding indication of the network device.

Based on this, FIG. 8 is a schematic flowchart of a fifth data packet processing method 800 according to an embodiment of this application. As shown in FIG. 8, the schematic flowchart is shown by using interaction between a network device and a terminal device. Steps performed by the terminal device and/or the network device may be performed by a module or a unit in the terminal device and/or the network device, for example, performed by a chip in the terminal device or the network device. Specifically, the method includes the following plurality of steps.

S801: The terminal device obtains first jitter information.

Specifically, the first jitter information is calculated by using a duration of a slot (slot) corresponding to a first reference subcarrier spacing (subcarrier spacing, SCS). A duration of one slot is related to an uplink SCS. For example, when the SCS is 15 kHz, a length of one slot is 1 ms; when the SCS is 30 kHz, a length of one slot is 0.5 ms; and by analogy, when the SCS is 960 kHz, a length of one slot is 1/64 ms. Therefore, when obtaining the first jitter information, the terminal device needs to determine the first reference SCS. In addition, to enable the network device to accurately learn of the first jitter information, the terminal device and the network device need to make the first reference SCS uniform.

This embodiment of this application provides several possible manners of determining the first reference SCS, as shown in the following:
(1) The network device uses an SCS of a default bandwidth part (bandwidth part, BWP) of a serving cell in which the terminal device is currently located as the first reference SCS.
(2) The network device uses an SCS of an active BWP in which the terminal device is currently located as the first reference SCS.
(3) When sending the first jitter information to the network device, the terminal device indicates the network device to use an SCS of a BWP in a current serving cell as the first reference SCS. For example, when reporting the first jitter information to the network device, the terminal device carries a BWP ID.
(4) When sending the first jitter information to the network device, the terminal device indicates the network device to use an SCS of a BWP in a serving cell as the first reference SCS. For example, when reporting the first jitter information to the network device, the terminal device carries a serving cell ID and a BWP ID.
(5) When sending the first jitter information to the network device, the terminal device explicitly indicates an SCS to the network device. For example, when reporting the first jitter information to the network device, the terminal device reports that the first reference SCS is 15 kHz.

In the solution of this application, if the first reference SCS is determined by the network device, the first reference SCS may be carried in configuration information (for example, the first configuration information in S501 in FIG. 5, the second configuration information in S803 in FIG. 8, or other configuration information sent by the network device to the terminal device) sent by the network device to the terminal device. If the first reference SCS is determined by the terminal device, the first reference SCS may be carried in the following S802. It may be understood that the foregoing several possible manners of determining the first reference SCS are merely examples, and do not constitute a limitation on the protection scope of this application.

In some embodiments, the first jitter information may be a jitter interval of an uplink data packet. For example, the first jitter information may be [-5, 5] ms. Alternatively, in some other embodiments, the first jitter information may be a jitter value. For example, the first jitter information may be 5 ms. Because a range of jitter information is usually symmetrical by using 0 as a center, that is, appears in a form of [-x, x], when the network device receives the jitter value, the network device may learn that the first jitter information reported by the terminal device is [-5, 5] ms.

S802: The terminal device sends the first jitter information to the network device.

In some embodiments, the first jitter information reported by the terminal device to the network device is in a unit of slot. For example, the first jitter information is [-5, 5] slots or 5 slots. In some other embodiments, the first jitter information reported by the terminal device to the network device is in a form of an absolute time length, for example, in a unit of ms, µs, or ns. A reported value is obtained through conversion based on a value in a unit of slot. For example, when the first jitter information is [-5, 5] slots, and the first reference SCS is 15 kHz, the first jitter information generated through conversion is [-5, 5] ms.

It should be noted that the first jitter information may be carried in an RRC message, a MAC CE, or another message sent by the terminal device to the network device. This is not limited in this application.

It may be understood that, when the first reference SCS is determined by the terminal device, the first reference SCS determined by the terminal device may be sent to the network device via a message carrying the first jitter information.

Optionally, if the first reference SCS is configured by the network device for the terminal device, or the network device indicates the terminal device to report first jitter information of some uplink data packets, the method 800 further includes the following S803.

S803: The network device sends second configuration information to the terminal device.

Specifically, the second configuration information may include a size of the first reference SCS, or the second configuration information may include an ID of a BWP corresponding to the first reference SCS, or the like. The second configuration information indicates the terminal device to report the first jitter information calculated by using the first reference SCS.

The second configuration information may be carried in a MAC CE, an RRC message, or another message. This is not limited in this application.

It may be understood that if the first configuration information (configuration information used to configure an identifier of the uplink data packet) sent by the network device to the terminal device further carries the first reference SCS, the network device may no longer send the second configuration information to the terminal device.

Optionally, for accuracy and properness of data scheduling, the terminal device may report jitter information to the network device a plurality of times. In some embodiments, when the terminal device detects that a range of the first jitter information changes, the terminal device may report changed first jitter information to the network device. In some other embodiments, when the terminal device detects that a range change of the first jitter information exceeds a preset third threshold, the terminal device reports new jitter information to the network device.

Specifically, for a change of the jitter information, the method 800 may further include the following plurality of steps.

S804: The terminal device updates the first jitter information to second jitter information.

It may be understood that the terminal device may update the first jitter information to the second jitter information when the first jitter information changes. Alternatively, to save reporting resources, the terminal device may update the first jitter information to the second jitter information when the range change of the first jitter information is greater than or equal to the third threshold. For example, if the third threshold is 1 ms, when the range of the first jitter information changes from [-3, 3] ms to [-4, 4] ms, or a larger range, the terminal device updates the first jitter information to the second jitter information.

It should be noted that, in some embodiments, the third threshold may be preconfigured by a network, may be determined by the terminal device, or may be predefined in a protocol. This is not limited in this application. In addition, the third threshold may be delivered to the terminal device via the first configuration information, the second configuration information, other information sent by the network device to the terminal device, or the like. This is not limited in this application.

S805: The terminal device sends the second jitter information to the network device. For this process, refer to related descriptions in S802. Details are not described herein again.

Based on this solution, the network device can know a collision probability of data of different users based on the jitter information, so that the network device can implement fuller consideration when performing packet discarding indication, and ensure, to a maximum extent, that more users can obtain a satisfactory service. In addition, in the solution of this application, because a granularity of the jitter information is related to an SCS, and the jitter information is calculated by using the slot, matching with a network scheduling occasion can be implemented. For example, for the foregoing three user equipments, the network device may start to attempt to schedule users at an occasion like 15 ms or 35 ms, and does not need to wait for a periodicity moment like 20 ms or 40 ms. In this way, data is scheduled as early as possible, a timeout risk is avoided, and a risk of user experience deterioration caused when the network device is incapable of scheduling all user data in short time can be further avoided.

According to the embodiments in FIG. 4 to FIG. 7, to improve properness of data packet management performed by the network device, the terminal device reports PSI information of the uplink data packet and a corresponding proportion to the network device at least one time. Therefore, to further optimize management of the uplink data packet by the network device, the network device may further make a more proper decision on packet discarding management of the uplink data packet based on the PSI information of the uplink data packet, the corresponding proportion, and the jitter information. Therefore, the method 800 may further include the following plurality of steps.

S806: The terminal device obtains first PSI information and a proportion of a data amount corresponding to each piece of first PSI information. For related descriptions of this step, refer to S401 in FIG. 4. Details are not described herein again.

S807: The terminal device sends first information to the network device. For this process, refer to related descriptions in S402 in FIG. 4. Details are not described herein again.

Optionally, when network congestion occurs, and the network device determines, based on the first jitter information and the first information, that the network device needs to indicate the terminal device to discard a packet, the method 800 further includes the following S805.

S808: The network device sends third indication information to the terminal device.

Specifically, that the network device sends the third indication information to the terminal device is that the terminal device indicates to discard a packet. The third indication information indicates the terminal device to discard a data packet corresponding to a part of the first PSI information, or the first indication information indicates the terminal device to discard a data packet that is in the uplink data packet and that is other than the data packet corresponding to the part of the first PSI information. For descriptions of indicating, by the network device, the terminal device to discard a packet, refer to S603 in FIG. 6. Details are not described herein again.

It may be understood that FIG. 8 is described only by using an example in which the terminal device reports the first information once. In some other embodiments, when the first information changes, the terminal device may further report the PSI information and the corresponding proportion to the network device a plurality of times. Certainly, the terminal device may further continue to update the second jitter information, and report updated second jitter information to the network device. This is not limited in this application.

In addition, when the terminal device reports both the jitter information and the PSI information, a reporting sequence is not limited in this application. The jitter information may be first reported, as shown in FIG. 8, the PSI information may be first reported, or the jitter information and the PSI information are simultaneously reported.

It may be understood that the foregoing embodiments in FIG. 4 to FIG. 8 in embodiments of this application are merely examples for description, and shall not constitute any limitation on the protection scope of this application. The solutions in the foregoing embodiments may be properly combined for use, and explanations or descriptions of terms in embodiments may be mutually referenced or explained in embodiments. This is not limited. For example, the embodiments in FIG. 5 and FIG. 6 are combined with each other, the embodiments in FIG. 5 and FIG. 7 are combined with each other, the embodiments in FIG. 5 and FIG. 8 are combined with each other, and the embodiments in FIG. 7 and FIG. 8 are combined with each other. In addition, the illustration in the figures does not constitute a limitation on an execution sequence. A person skilled in the art may flexibly adjust a sequence of steps based on the examples in the figures. In addition, sequence numbers of the foregoing processes do not mean an execution sequence, and the execution sequence of the processes should be determined based on functions and internal logic of the processes. In addition, the foregoing steps are not mandatory steps. When one or more of the steps are missing, a problem to be resolved in this application can also be resolved, and the technical solutions corresponding to the steps also fall within the scope disclosed in this application. Various numerical numbers or sequence numbers in the foregoing processes are merely for differentiation for ease of description, and should not constitute any limitation on the implementation processes of embodiments of this application.

It should be noted that the network device in the foregoing embodiments may be a central network device, for example, a central base station, or may be a network device in a split architecture, for example, a base station in a CU-DU split architecture. When the method provided in this embodiment of this application is applied to the network device using the CU-DU split architecture, the PSI information and/or the jitter information (including the first PSI information, the second PSI information, the first jitter information, and the second jitter information mentioned above) reported by the terminal device are/is first transmitted to a DU side through an air interface. In a scenario, the PSI information and/or the jitter information are/is carried in a protocol layer message on the DU side, for example, carried in a MAC CE. If a packet discarding operation is controlled by the CU side, for example, controlled by a packet data convergence protocol (packet data convergence protocol, PDCP) layer, a DU may further forward the PSI information and/or the jitter information to a CU through an F1 interface. In another scenario, the PSI information and/or the jitter information are/is carried in a protocol layer message on a CU side, for example, carried in an RRC message, and a CU needs to parse out the PSI information and/or the jitter information. If a packet discarding operation is controlled by the DU side, for example, controlled by a medium access control (medium access control, MAC) layer, a DU may forward the PSI information and/or the jitter information to the CU through an F1 interface, and after parsing the PSI information and/or the jitter information, the CU re-sends the PSI information and/or the jitter information that are/is parsed out to the DU through the F1 interface.

Specifically, FIG. 9 is a schematic flowchart of a sixth data packet processing method 900 according to an embodiment of this application. As shown in FIG. 9, the schematic flowchart is shown by using interaction between a base station in a CU-DU split architecture and a terminal device. Steps performed by the terminal device and/or the base station in the CU-DU split architecture may be performed by a module or a unit in the terminal device and/or the base station in the CU-DU split architecture, for example, performed by a chip in the terminal device or the base station in the CU-DU split architecture. Specifically, the method includes a plurality of steps.

S901: The terminal device obtains first PSI information corresponding to an uplink data packet and a proportion of a data amount corresponding to each piece of first PSI information. For this process, refer to S401 in FIG. 4. Details are not described herein again.

S902: The terminal device sends first information of the uplink data packet to a DU.

Specifically, after S901 ends, the terminal device sends the first information of the data packet to the DU through a Uu interface. Correspondingly, the DU receives the first information through the Uu interface. For related descriptions of the first information, refer to S402. Details are not described herein again.

It may be understood that, if a packet discarding operation is controlled by a DU side, and the first information is carried in a protocol layer message on the DU side, if network congestion occurs, the DU may directly send indication information to the terminal device, to indicate the terminal device to discard a part of data packets.

Optionally, if a packet discarding operation is controlled by a CU side (regardless of whether the first information is carried in a CU protocol layer message or a protocol layer message on a DU side), or the first information is carried in a CU protocol layer message, the method 900 further includes the following S903.

S903: The DU sends the first information of the uplink data packet to a CU.

Specifically, in some embodiments, if the first information is carried in the protocol layer message on the DU side, the DU parses out the first information, and sends the first information to the CU through an F1 interface. In some other embodiments, if the first information is carried in the CU protocol layer message, the DU forwards the first information to the CU through an F1 interface. The DU may include, in a control plane message or a user plane message, the first information sent to or forwarded to the CU. In this case, if network congestion occurs, the CU may send the indication information to the terminal device, to indicate the terminal device to discard a part of data packets.

Optionally, if the packet discarding operation is controlled by the DU side, the method 900 further includes the following S904.

S904: The CU sends processed first information of the uplink data packet to the DU.

Specifically, the CU parses the received first information, and sends the processed first information to the DU through the F1 interface. For example, the CU may include the first information in the control plane message, and send the first information to the DU. If network congestion occurs, the CU may send the indication information to the terminal device, to indicate the terminal device to discard a part of data packets.

It should be noted that FIG. 9 is merely an example for description relative to the embodiment shown in FIG. 4, and does not constitute any limitation on the protection scope of this application. It may be understood that the network device in FIG. 5 to FIG. 8 may be replaced with the network device in the split architecture shown in FIG. 9. For example, the terminal device reports second information and/or jitter information to the DU, and the DU transfers the second information and/or the jitter information to the CU through the F1 interface. In addition, other combined embodiments that are not described in FIG. 5 to FIG. 8 are still applicable to the network device in the split architecture shown in FIG. 9.

Based on the foregoing solution, the PSI information (including the first information and the second information) and/or the jitter information are/is transferred through the F1 interface, to ensure that in a CU-DU split scenario, the PSI information reported by the terminal device can be fully used by the network device.

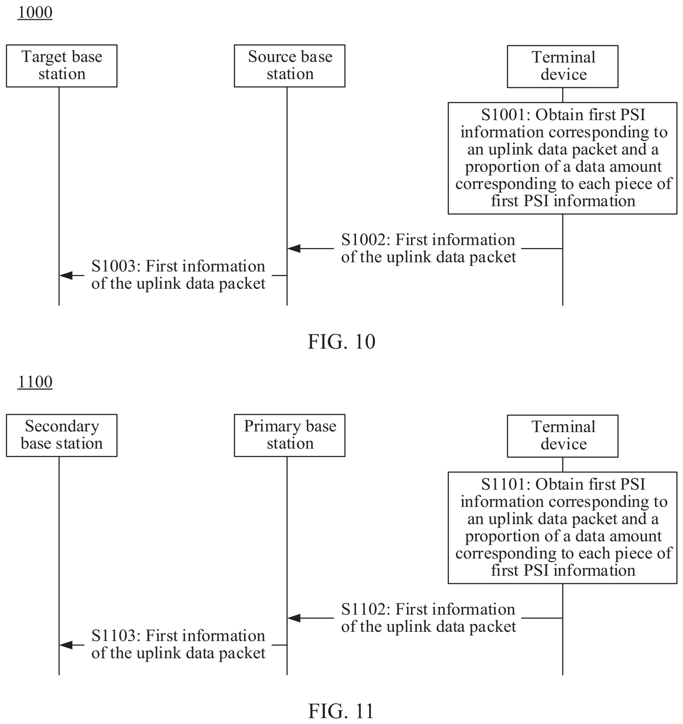

In addition, it should be further noted that the technical solutions in embodiments of this application may be further applied to a handover scenario. The following uses handover from a source base station to a target base station as an example for description. Specifically, as shown in FIG. 10, a schematic flowchart is shown by using interaction between a source base station, a target base station, and a terminal device. Steps performed by the source base station, the target base station, and the terminal device may be performed by modules or units in the source base station, the target base station, and the terminal device, for example, performed by chips in the source base station, the target base station, and the terminal device. Specifically, the method includes the following plurality of steps.

S1001: The terminal device obtains first PSI information corresponding to an uplink data packet and a proportion of a data amount corresponding to each piece of first PSI information. For this process, refer to S401 in FIG. 4. Details are not described herein again.

S1002: The terminal device sends first information of the uplink data packet to the source base station.

Specifically, after S1001 ends, the terminal device sends the first information of the data packet to the source base station through a Uu interface. Correspondingly, the source base station receives the first information through the Uu interface. For related descriptions of the first information, refer to S402. Details are not described herein again.

S1003: The source base station sends the first information of the uplink data packet to the target base station.

Specifically, the source base station sends the first information to the target base station through an Xn interface. For example, the source base station may include the first information in an RRC message, and send the first information to the target base station.

It should be noted that FIG. 10 is merely an example for description relative to the embodiment shown in FIG. 4, and does not constitute any limitation on the protection scope of this application. It may be understood that the embodiments in FIG. 5 to FIG. 8 may still be applied to the handover scenario shown in FIG. 10. For example, the terminal device reports second information and/or jitter information to the source base station, and the source base station transfers the second information and/or the jitter information to the target base station through the Xn interface. In addition, other combined embodiments that are not described in FIG. 5 to FIG. 8 are still applicable to the handover scenario shown in FIG. 10.

Based on the foregoing solution, PSI information (including the first information and the second information) and/or the jitter information are/is transferred through the Xn interface, to ensure that in a handover scenario, the PSI information reported by the terminal device can be fully used by a network device.

In addition, the technical solutions of this application may be further applied to a DC scenario. Specifically, as shown in FIG. 11, a schematic flowchart is shown by using interaction between a primary base station, a secondary base station, and a terminal device. Steps performed by the primary base station, the secondary base station, and the terminal device may be performed by modules or units in the primary base station, the secondary base station, and the terminal device, for example, performed by chips in the primary base station, the secondary base station, and the terminal device. Specifically, the method includes the following plurality of steps.

S1101: The terminal device obtains first PSI information corresponding to an uplink data packet and a proportion of a data amount corresponding to each piece of first PSI information. For this process, refer to S401 in FIG. 4. Details are not described herein again.

S1102: The terminal device sends first information of the uplink data packet to the primary base station.

Specifically, after S1101 ends, the terminal device sends the first information of the data packet to the primary base station through a Uu interface. Correspondingly, the primary base station receives the first information through the Uu interface. For related descriptions of the first information, refer to S402. Details are not described herein again.

S1103: The primary base station sends the first information of the uplink data packet to the secondary base station.

S1103: Specifically, the primary base station sends the first information to the secondary base station through an Xn interface. For example, the primary base station may include the first information in an RRC message, and send the first information to the secondary base station.

It should be noted that FIG. 11 is merely an example for description relative to the embodiment shown in FIG. 4, and does not constitute any limitation on the protection scope of this application. It may be understood that the embodiments in FIG. 5 to FIG. 8 may still be applied to the DC scenario shown in FIG. 11. For example, the terminal device reports second information and/or jitter information to the primary base station, and the primary base station transfers the second information and/or the jitter information to the secondary base station through the Xn interface. In addition, other combined embodiments that are not described in FIG. 5 to FIG. 8 are still applicable to the DC scenario shown in FIG. 11.

Based on the foregoing solution, PSI information (including the first information and the second information) and/or the jitter information are/is transferred through the Xn interface, to ensure that in the DC scenario, information reported by the terminal device can be fully used by a network device. It should be understood that the embodiments in FIG. 4 to FIG. 11 in embodiments of this application are merely examples for description, and the illustration in the figures does not constitute a limitation on an execution sequence. A person skilled in the art may flexibly adjust a sequence of steps based on the examples in the figures. In addition, sequence numbers of the foregoing processes do not mean an execution sequence, and the execution sequence of the processes should be determined based on functions and internal logic of the processes. In addition, the foregoing steps are not mandatory steps. When one or more of the steps are missing, a problem to be resolved in this application can also be resolved, and the technical solutions corresponding to the steps also fall within the scope disclosed in this application. Various numerical numbers or sequence numbers in the foregoing processes are merely for differentiation for ease of description, and should not constitute any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on a requirement. Correspondingly, an apparatuses provided in embodiments of this application may also correspondingly implement these features or functions. Details are not described herein.

In addition, the solutions in embodiments of this application may be properly combined for use, and explanations or descriptions of terms in embodiments may be mutually referenced or explained in embodiments. This is not limited.

In the foregoing embodiments provided in this application, the solutions of the communication methods provided in embodiments of this application are separately described from perspectives of devices/network elements and interaction between the devices/network elements. It may be understood that, to implement the foregoing functions, the network elements and devices include corresponding hardware structures and/or corresponding software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

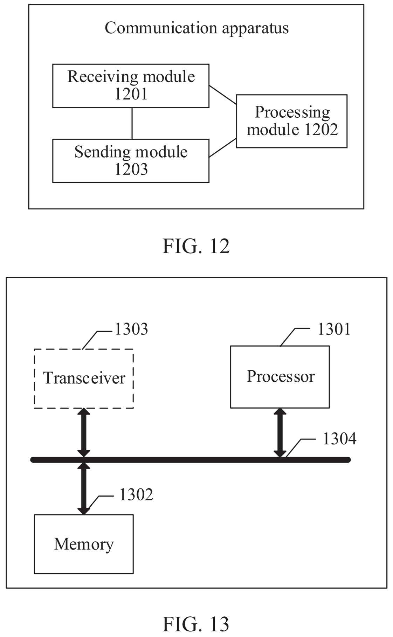

FIG. 12 is a block diagram of a communication apparatus 1200 according to an embodiment of this application. The apparatus 1200 includes a receiving module 1201, and the receiving module 1201 may be configured to implement a corresponding receiving function. The receiving module 1201 may also be referred to as a receiving unit.

The apparatus 1200 further includes a processing module 1202, and the processing module 1202 may be configured to implement a corresponding processing function.

The apparatus 1200 further includes a sending module 1203, the sending module 1203 may be configured to implement a corresponding sending function, and the sending module 1203 may also be referred to as a sending unit.

Optionally, the apparatus 1200 further includes a storage unit, the storage unit may be configured to store instructions and/or data, and the processing unit 1202 may read the instructions and/or the data in the storage unit, to enable the apparatus to implement actions of a related apparatus in the foregoing method embodiments.

The apparatus 1200 may be configured to perform actions performed by the terminal device or the network device in the foregoing method embodiments. In this case, the apparatus 1200 may be a component of the terminal device or the network device, the receiving module 1201 is configured to perform a receiving-related operation of the terminal device or the network device in the foregoing method embodiments, the processing module 1202 is configured to perform a processing-related operation of the terminal device or the network device in the foregoing method embodiments, and the sending module 1203 is configured to perform a sending-related operation of the terminal device or the network device in the foregoing method embodiments.

In a design, the apparatus 1200 is configured to perform actions performed by any network element or any device in the foregoing method embodiments. In an embodiment, the communication apparatus may be configured to perform operations of the terminal device in FIG. 4 to FIG. 11. For example:

The receiving module 1201 is configured to receive configuration information, where the configuration information includes an identifier corresponding to an uplink data packet, and the configuration information indicates the terminal device to report first information of the uplink data packet corresponding to the identifier.

The processing module 1202 is configured to obtain first PSI information corresponding to the uplink data packet and a proportion of a data amount corresponding to each piece of first PSI information. The proportion of the data amount corresponding to each piece of first PSI information is a proportion of the data amount corresponding to each piece of first PSI information in a total data amount corresponding to the uplink data packet.

The sending module 1203 is configured to send the first information of the uplink data packet to the network device, where the first information of the uplink data packet includes first PSI information and the proportion of the data amount corresponding to each piece of first PSI information, or a proportion of a data amount corresponding to a part of the first PSI information, and the first information is used by the network device to perform packet discarding management on the uplink data packet.

It should be understood that a specific process in which the modules perform the foregoing corresponding steps is described in detail in the foregoing method embodiments. For brevity, details are not described herein again.

In addition, the receiving module 1201, the processing module 1202, and the sending module 1203 in the communication apparatus may further implement other operations or functions of the terminal device in the foregoing methods. Details are not described herein again.

In another embodiment, the communication apparatus may be configured to perform operations of the network device in FIG. 4 to FIG. 11. For example:

The receiving module 1201 is configured to receive first information of an uplink data packet from the terminal device, where the first information of the uplink data packet includes first PSI information and a proportion of a data amount corresponding to each piece of first PSI information, or a proportion of a data amount corresponding to a part of the first PSI information.

The processing module 1202 is configured to perform packet discarding management on the uplink data packet based on the first information.

The sending module 1203 is configured to send configuration information, where the configuration information includes an identifier corresponding to the uplink data packet, and the configuration information indicates the terminal device to report the first information of the uplink data packet corresponding to the identifier.

The receiving module 1201, the processing module 1202, and the sending module 1203 in the communication apparatus may further implement other operations or functions of the network device in the foregoing methods. Details are not described herein again.

It should be understood that a specific process in which the modules perform the foregoing corresponding steps is described in detail in the foregoing method embodiments. For brevity, details are not described herein again.

FIG. 13 is a diagram of another possible structure of the communication apparatus in the foregoing embodiment. The communication apparatus includes a processor 1301. As shown in FIG. 13, the communication apparatus may further include at least one memory 1302, configured to store program instructions and/or data. The memory 1302 is coupled to the processor 1301. The coupling in this embodiment of this application may be an indirect coupling or a communication connection between apparatuses, units, or modules in an electrical form, a mechanical form, or another form, and is used for information exchange between the apparatuses, the units, or the modules. The processor 1301 may operate in collaboration with the memory 1302. The processor 1301 may execute the program instructions stored in the memory 1302. At least one of the at least one memory may be included in the processor.

The communication apparatus may further include a transceiver 1303, configured to communicate with another device through a transmission medium, so that the apparatus can communicate with the another device. Optionally, the transceiver 1303 may be an interface, a bus, a circuit, or an apparatus that can implement receiving and sending functions. Optionally, the transceiver 1303 may include a receiver and a transmitter.

A specific connection medium between the processor 1301, the memory 1302, and the transceiver 1303 is not limited in this embodiment of this application. In this embodiment of this application, the processor 1301, the memory 1302, and the transceiver 1303 are connected through a bus 1304 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line is used for representation in FIG. 13, but it does not indicate that there is only one bus or only one type of bus.

For example, in an embodiment, the processor 1301 is configured to perform other operations or functions of a terminal device. The transceiver 1303 is configured to implement communication between the communication apparatus and another network element/device (for example, a gNB/DU).

In another embodiment, the processor 1301 is configured to perform other operations or functions of a network device. The transceiver 1303 is configured to implement communication between the communication apparatus and another network element/device (for example, UE/a CU).

One or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may include but is not limited to at least one of the following various types of computing devices that run software: a central processing unit (central processing unit, CPU), a microprocessor, a digital signal processor (digital signal processor, DSP), a microcontroller unit (microcontroller unit, MCU), an artificial intelligence processor, or the like. Each computing device may include one or more cores configured to execute software instructions to perform an operation or processing. The processor may be built in a system-on-a-chip (system-on-a-chip, SoC) or an application-specific integrated circuit (application-specific integrated circuit, ASIC), or may be an independent semiconductor chip. In addition to the core configured to execute the software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

When the foregoing modules or units are implemented by software, all or a part of the foregoing modules or units may be implemented in a form of a computer program product. The computer program product includes one or more computer instructions. When the computer program instructions are loaded and executed on a computer, the procedures or functions according to embodiments of this application are all or partially generated. The computer may be a generalpurpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the methods provided in embodiments of this application, this application further provides a computer program product. The computer program product includes computer program code, and when the computer program code is run on a computer, the computer is enabled to perform the methods on a terminal device side in the foregoing method embodiments.

According to the methods provided in embodiments of this application, this application further provides a computer program product. The computer program product includes computer program code, and when the computer program code is run on a computer, the computer is enabled to perform the methods on a network device side in the foregoing method embodiments.

According to the methods provided in embodiments of this application, this application further provides a computer-readable medium. The computer-readable medium stores program code, and when the program code is run on a computer, the computer is enabled to perform the methods on a terminal device side in the foregoing method embodiments.

According to the methods provided in embodiments of this application, this application further provides a computer-readable medium. The computer-readable medium stores program code, and when the program code is run on a computer, the computer is enabled to perform the methods on a network device side in the foregoing method embodiments.

An embodiment of this application further provides a processing apparatus, including a processor and an interface. The processor is configured to perform the communication method in any one of the foregoing method embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a contributing part, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data packet processing method, comprising:
obtaining, by a terminal device, first protocol data unit set importance PSI information corresponding to an uplink data packet and a proportion of a data amount corresponding to each piece of first PSI information, wherein the proportion of the data amount corresponding to each piece of first PSI information is a proportion of the data amount corresponding to each piece of first PSI information in a total data amount corresponding to the uplink data packet; and
sending, by the terminal device, first information of the uplink data packet to the network device, wherein the first information of the uplink data packet comprises the first PSI information and the proportion of the data amount corresponding to each piece of first PSI information, or a proportion of a data amount corresponding to a part of the first PSI information, and the first information is used by the network device to perform packet discarding management on the uplink data packet.

2. The method according to claim 1, wherein the method further comprises:
receiving, by the terminal device, configuration information from the network device, wherein the configuration information comprises an identifier corresponding to the uplink data packet, and the configuration information indicates the terminal device to report the first information of the uplink data packet corresponding to the identifier.

3. The method according to claim 2, wherein the identifier is a flow identifier of a quality of service QoS flow corresponding to the uplink data packet, an identifier of a logical channel LCH corresponding to the uplink data packet, or an identifier of a data radio bearer DRB corresponding to the uplink data packet.

4. The method according to any one of claims 1 to 3, wherein the method further comprises:
receiving, by the terminal device, indication information from the network device, wherein the indication information indicates the terminal device to discard a data packet corresponding to a part of the first PSI information, or the indication information indicates the terminal device to discard a data packet that is in the uplink data packet and that is other than the data packet corresponding to the part of the first PSI information.

5. The method according to any one of claims 1 to 4, wherein the proportion of the data amount corresponding to the part of the first PSI information is determined by the terminal device based on a preset first threshold.

6. The method according to any one of claims 1 to 5, wherein the method further comprises:
updating, by the terminal device, the first PSI information and the proportion of the data amount corresponding to each piece of first PSI information to second PSI information and a proportion of a data amount corresponding to each piece of second PSI information; and
sending, by the terminal device, second information of the uplink data packet to the network device, wherein the second information of the uplink data packet comprises the second PSI information and the proportion of the data amount corresponding to each piece of second PSI information, or a proportion of a data amount corresponding to a part of the second PSI information, and the second information is used by the network device to perform packet discarding management on the uplink data packet.

7. The method according to claim 6, wherein the updating, by the terminal device, the first PSI information and the proportion of the data amount corresponding to each piece of first PSI information to the second PSI information and the proportion of the data amount corresponding to each piece of second PSI information comprises:
when the terminal device determines that a change of a proportion of a data amount corresponding to a part of the first PSI information exceeds a preset second threshold, updating, by the terminal device, the first PSI information and the proportion of the data amount corresponding to each piece of first PSI information to the second PSI information and the proportion of the data amount corresponding to each piece of second PSI information.

8. The method according to any one of claims 1 to 7, wherein the network device is a first network device, and the sending, by the terminal device, the first information of the uplink data packet to the network device comprises: sending, by the terminal device, the first information of the uplink data packet to the first network device, to enable the first network device to send the first information to a second network device through an F1 interface, wherein the first network device is a distributed unit DU, and the second network device is a central unit CU; or the first network device is a CU, and the second network device is a DU.

9. The method according to any one of claims 1 to 7, wherein the network device is a first network device, and the sending, by the terminal device, the first information of the uplink data packet to the network device comprises: sending, by the terminal device, the first information of the uplink data packet to the first network device, to enable the first network device to send the first information to a second network device through an Xn interface, wherein the first network device is a source base station of the terminal device in a handover scenario, and the second network device is a target base station of the terminal device in the handover scenario; or the first network device is a primary base station in a dual connectivity DC scenario, and the second network device is a secondary base station in the DC scenario.

10. The method according to any one of claims 2 to 9, wherein the configuration information further indicates the terminal device to send first jitter information of the uplink data packet corresponding to the identifier, and the method further comprises:
obtaining, by the terminal device, the first jitter information, wherein the first jitter information is calculated by using a duration of a slot corresponding to a first reference subcarrier spacing SCS; and
sending, by the terminal device, the first jitter information to the network device.

11. The method according to claim 10, wherein the method further comprises:
updating, by the terminal device, the first jitter information to second jitter information, wherein the second jitter information is calculated by using the duration of the slot corresponding to the first reference SCS or a duration of a slot corresponding to the second reference SCS; and
sending, by the terminal device, the second jitter information to the network device.

12. The method according to claim 11, wherein the updating, by the terminal device, the first jitter information to the second jitter information comprises: when the terminal device determines that a change of the first jitter information exceeds a preset third threshold, or when the terminal device determines that the first reference SCS changes, updating, by the terminal device, the first jitter information to the second jitter information.

13. The method according to any one of claims 1 to 12, wherein the first PSI information is a PSI level or a range of a PSI level.

14. A data packet processing method, comprising:
receiving, by a network device, first information of an uplink data packet from a terminal device, wherein the first information of the uplink data packet comprises first protocol data unit importance PSI information corresponding to the uplink data packet and a proportion of a data amount corresponding to each piece of first PSI information, or a proportion of a data amount corresponding to the part of the first PSI information, and the proportion of the data amount corresponding to each piece of first PSI information is a proportion of the data amount corresponding to each piece of first PSI information in a total data amount corresponding to the uplink data packet; and
performing, by the network device, packet discarding management on the uplink data packet based on the first information.

15. The method according to claim 14, wherein the method further comprises:
sending, by the network device, configuration information to the terminal device, wherein the configuration information comprises an identifier corresponding to the uplink data packet, and the configuration information indicates the terminal device to report the first information of the uplink data packet corresponding to the identifier.

16. The method according to claim 15, wherein the identifier is a flow identifier of a quality of service QoS flow corresponding to the uplink data packet, an identifier of a logical channel LCH corresponding to the uplink data packet, or an identifier of a data radio bearer DRB corresponding to the uplink data packet.

17. The method according to any one of claims 14 to 16, wherein the method further comprises:
sending, by the network device, indication information to the terminal device, wherein the indication information indicates the terminal device to discard a data packet corresponding to a part of the first PSI information, or the indication information indicates the terminal device to discard a data packet that is in the uplink data packet and that is other than the data packet corresponding to the part of the first PSI information.

18. The method according to claim 17, wherein the proportion of the data amount corresponding to the part of the first PSI information is determined by the terminal device based on a preset first threshold.

19. The method according to any one of claims 14 to 18, wherein the method further comprises:
receiving, by the network device, second information of the uplink data packet from the terminal device, wherein the second information of the uplink data packet comprises the second PSI information and a proportion of a data amount corresponding to each piece of second PSI information, or a proportion of a data amount corresponding to a part of the second PSI information; and
performing, by the network device, packet discarding management on the uplink data packet based on the second information.

20. The method according to claim 19, wherein the receiving, by the network device, the second information of the uplink data packet from the terminal device comprises: when a change of a proportion of a data amount corresponding to the first PSI information exceeds a preset second threshold, receiving, by the network device, the second information of the uplink data packet from the terminal device.

21. The method according to any one of claims 14 to 20, wherein the network device is a first network device, and the receiving, by the network device, the first information of the uplink data packet from the terminal device comprises:
receiving, by the first network device, the first information of the uplink data packet from the terminal device; and
sending, by the first network device, the first information to a second network device through an F1 interface, wherein the first network device is a distributed unit DU, and the second network device is a central unit CU; or the first network device is a CU, and the second network device is a DU.

22. The method according to any one of claims 14 to 20, wherein the network device is a first network device, and the receiving, by the network device, the first information of the uplink data packet from the terminal device comprises:
receiving, by the first network device, the first information of the uplink data packet from the terminal device; and
sending, by the first network device, the first information to a second network device through an Xn interface, wherein the first network device is a source base station of the terminal device in a handover scenario, and the second network device is a target base station of the terminal device in the handover scenario; or the first network device is a primary base station in a dual connectivity DC scenario, and the second network device is a secondary base station in the DC scenario.

23. The method according to any one of claims 15 to 22, wherein the configuration information further indicates the terminal device to send first jitter information of the uplink data packet corresponding to the identifier, and the method further comprises:
receiving, by the network device, the first jitter information from the terminal device, wherein the first jitter information is calculated by using a duration of a slot corresponding to a first reference subcarrier spacing SCS.

24. The method according to claim 23, wherein the method further comprises:
receiving, by the network device, second jitter information from the terminal device, wherein the second jitter information is calculated by using the duration of the slot corresponding to the first reference SCS or a duration of a slot corresponding to the second reference SCS.

25. The method according to claim 24, wherein the receiving, by the network device, the second jitter information from the terminal device comprises: when a change of the first jitter information exceeds a preset third threshold, or the first reference SCS changes, receiving, by the network device, the second jitter information from the terminal device.

26. The method according to any one of claims 15 to 25, wherein the first PSI information is a PSI level or a range of a PSI level.

27. A communication apparatus, comprising:
a unit or module configured to implement the method according to any one of claims 1 to 13, or
a unit or module configured to implement the method according to any one of claims 14 to 26.

28. A communication system, comprising a first communication apparatus and a second communication apparatus, wherein
the first communication apparatus is configured to implement the method according to any one of claims 1 to 13; and
the second communication apparatus is configured to implement the method according to any one of claims 14 to 26.

29. A computer-readable storage medium, wherein the computer-readable storage medium stores computer instructions, and when the computer instructions are run on a first communication apparatus, the first communication apparatus is enabled to perform the method according to any one of claims 1 to 13; or when the computer instructions are run on a second communication apparatus, the second communication apparatus is enabled to perform the method according to any one of claims 14 to 26.

30. A chip system, wherein the chip comprises a processor and a communication interface, the processor reads instructions through the communication interface and runs the instructions, and when the chip is installed in a first communication apparatus, the first communication apparatus is enabled to perform the method according to any one of claims 1 to 13; or when the chip is installed in a second communication apparatus, the second communication apparatus is enabled to perform the method according to any one of claims 14 to 26.
